(19) **Europäisches Patentamt**
**European Patent Office**
**Office européen des brevets**

(11) **EP 2 388 558 B1**

(12) **EUROPÄISCHE PATENTSCHRIFT**

(45) Veröffentlichungstag und Bekanntmachung des Hinweises auf die Patenterteilung:
**29.08.2018 Patentblatt 2018/35**

(51) Int Cl.:
***G01D 5/347*** *(2006.01)* ***G01D 5/38*** *(2006.01)*

(21) Anmeldenummer: **11164731.9**

(22) Anmeldetag: **04.05.2011**

(54) **Optische Positionsmesseinrichtung**

Optical positioning device

Dispositif optique de mesure de la position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2010 DE 102010029211**

(43) Veröffentlichungstag der Anmeldung:
**23.11.2011 Patentblatt 2011/47**

(73) Patentinhaber: **Dr. Johannes Heidenhain GmbH 83301 Traunreut (DE)**

(72) Erfinder:
• **Holzapfel, Wolfgang, Dr. 83119 Obing (DE)**
• **Hermann, Michael 83342 Tacherting (DE)**
• **Sändig, Karsten, Dr. 83349 Palling (DE)**

(56) Entgegenhaltungen:
**EP-A2- 1 901 041**

**Beschreibung**

Die vorliegende Erfindung betrifft eine optische Positionsmesseinrichtung.

Im Zusammenhang mit optischen Positionsmesseinrichtungen zur Erfassung von Relativbewegungen der Maßverkörperung und Abtasteinheit entlang gekrümmter Messrichtungen sind zwei Grundtypen zu unterscheiden:

> a) Optische Positionsmesseinrichtungen mit Maßverkörperungen in Form von auf Teilscheiben angeordneten Radialteilungen;
> b) Optische Positionsmesseinrichtungen mit Maßverkörperungen in Form von auf Teilungstrommeln angeordneten Trommelteilungen.

Bei den erstgenannten optischen Positionsmesseinrichtungen, die als Maßverkörperung eine Teilscheibe mit einer feinen Radialteilung umfassen, sind üblicherweise die Anbautoleranzen der Maßverkörperung gegenüber der Abtasteinheit äußerst klein. Dies liegt an dem starken Signalabfall, der bereits bei kleinen radialen, tangentialen oder longitudinalen Lageabweichungen der Radialteilung von der Soll-Einbaulage aufgrund der damit einhergehenden Wellenfrontdeformationen in den an der Signalerzeugung beteiligten Teilstrahlenbündeln resultiert, die zur interferierenden Überlagerung gebracht werden. Die sich radial ändernden Gitterkonstanten der Radialteilung verursachen hierbei starke Wellenfrontdeformationen. Dies bedeutet, dass die Wellenfronten der von der Radialteilung gebeugten Teilstrahlenbündel z.T. erhebliche Abweichungen von ebenen Wellenfronten aufweisen.

Ähnliche Probleme treten auch bei optischen Positionsmesseinrichtungen der zweitgenannten Kategorie auf, bei denen die Maßverkörperung als sog. Trommelteilung am äußeren Umfang einer rotierenden Trommel bzw. eines rotierenden Zylinders angeordnet ist. Hier verursacht die gekrümmte Trommelteilung ebenfalls eine Verzerrung der Wellenfronten in den Teilstrahlenbündeln, die zur Signalerzeugung genutzt werden.

Derartige Wellenfrontdeformationen resultieren auch bereits in der idealen Anbaulage der Maßverkörperung und werden nachfolgend als nominale Wellenfrontdeformationen bezeichnet. Bei einer nicht idealen Anbaulage entstehen zusätzliche toleranzbedingte Wellenfrontdeformationen. Die verschiedenen auftretenden Wellenfrontdeformationen in den zur Signalerzeugung genutzten Teilstrahlenbündeln sind somit maßgeblich verantwortlich für den eingangs erwähnten Signaleinbruch in den erzeugten Positionssignalen. Eine deutlich verschlechterte Signalqualität derartiger optischer Positionsmesseinrichtungen ist die Folge.

In hochauflösenden optischen Positionsmesseinrichtungen zur Erfassung von linearen Verschiebebewegungen von Maßverkörperung und Abtasteinheit ist ferner die Verwendung von Retroreflektoren in Form von Tripelprismen bekannt; beispielsweise sei hierzu auf die EP 387 520 A2 verwiesen. Beim darin vorgeschlagenen Abtaststrahlengang wird ein kollimiertes Strahlenbündel einer Laser-Lichtquelle am Lineargitter der Maßverkörperung in Teilstrahlenbündel +1. und -1. Beugungsordnung gebeugt. Anschließend werden die Teilstrahlenbündel mittels einem oder mehrerer Retroreflektoren in Form von Tripelprismen erneut auf das Lineargitter der Maßverkörperung gelenkt. Nach einer weiteren Beugung an der Maßverkörperung werden die beiden Teilstrahlenbündel an einem Überlagerungsort zur Interferenz gebracht. Durch die Verwendung des einen oder der mehreren als Tripelprismen ausgebildeten Retroreflektoren wird sichergestellt, dass auch bei einer beliebigen Kippung der Maßverkörperung gegenüber der Abtasteinheit die beiden Teilstrahlenbündel nach der zweiten Beugung am Lineargitter der Maßverkörperung ihre Richtung beibehalten. Es tritt dann keine Wellenfrontverkippung der interferierenden Teilstrahlenbündel auf. Daraus ergibt sich ein maximaler Interferenzkontrast im Überlappbereich der interferierenden Teilstrahlenbündel. Auf diese Art und Weise sind grundsätzlich große Anbautoleranzen auch bei feinsten Teilungsperioden der Maßverkörperung und großen Abtastflächen, d.h. großen Strahlquerschnitten am Ort der Maßverkörperung, erreichbar. Im Grunde basieren die guten Eigenschaften solcher optischer Positionsmesseinrichtungen jedoch darauf, dass die Wellenfronten der Teilstrahlenbündel sowohl nach der Beugung am Lineargitter der Maßverkörperung als auch nach der Reflexion am Retroreflektor möglichst eben bleiben. Dadurch werden die Wellenfrontverkippungen infolge einer Kippung der Maßverkörperung in idealer Weise durch die verwendeten Retroreflektoren kompensiert.

Sollen nunmehr auch hochauflösende optische Positionsmesseinrichtungen zur Erfassung von Relativbewegungen der Maßverkörperung und Abtasteinheit entlang gekrümmter Messrichtungen, also Systeme mit Radialgitter- oder Trommelteilungen, in Verbindung mit Retroreflektoren eingesetzt werden, so ergeben sich bestimmte Probleme. In der US 5,442,172 werden diese Probleme analysiert und vermeintliche Lösungen vorgeschlagen. So soll der die Signalqualität beeinträchtigende Einfluss von Wellenfrontdeformationen gemäß dieser Druckschrift verringert werden, indem eine ideale Reflektoreinheit vorgeschlagen wird. Diese umfasst eine Kombination aus einer sphärischen Linse und einem Dachkantprisma, das in der Brennebene der Linse angeordnet ist. Eine genauere Analyse der vorgeschlagenen Abtastoptik ergibt jedoch, dass immer noch ein signifikanter Signalabfall bei einer Dejustage von Maßverkörperung und Abtasteinheit resultiert. Hinzu kommt, dass bei der vorgeschlagenen idealen Retroreflektoreinheit der Strahlfokus auf der Dachkante des Dachkantprisma liegt und dieses daher ohne jegliche Fehler in diesem Bereich hergestellt werden muss. Es dürfen in diesem Bereich keinerlei Inhomogenitäten wie z.B. Einschlüsse, Verschmutzungen oder aber Aussprünge vorliegen. Aufgrund der hohen Fertigungsanforderungen an ein solches Bauteil ist dieses somit extrem teuer.

Die EP 1 901 041 A2 offenbart eine hochauflösende optische Positionsmesseinrichtung, die eine Erzeugung phasenverschobener Abtastsignale ohne den Einsatz von polarisationsoptischen Bauelementen ermöglicht. Die vorstehend diskutierten Probleme in Verbindung mit gekrümmten Messrichtungen werden in dieser Druckschrift nicht adressiert und demzufolge auch nicht gelöst.

Aufgabe der vorliegenden Erfindung ist es, eine hochauflösende optische Positionsmesseinrichtung zur Erfassung der Relativposition einer Abtasteinheit und einer hierzu in einer gekrümmten Messrichtung beweglichen Maßverkörperung mit großen Anbautoleranzen anzugeben.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen in den abhängigen Ansprüchen.

Die erfindungsgemäße optische Positionsmesseinrichtung umfasst eine Abtasteinheit und eine Maßverkörperung, wobei die Abtasteinheit und die Maßverkörperung entlang einer gekrümmten Messrichtung gegeneinander bewegbar. Über die erfindungsgemäße Positionsmesseinrichtung ist die Relativposition von Abtasteinheit und Maßverkörperung erfassbar. Seitens der Abtasteinheit ist mindestens eine Reflektoreinheit und eine Detektoreinheit vorgesehen. Die Reflektoreinheit besteht aus einem ersten Wellenfrontkorrektor, einem Strahlrichtungsinverter und einem zweiten Wellenfrontkorrektor. Die Reflektoreinheit ist in der Abtasteinheit dergestalt angeordnet und/oder ausgebildet, dass Strahlenbündel zunächst eine erste Kombination aus Maßverkörperung und erstem Wellenfrontkorrektor durchlaufen, anschließend über den Strahlrichtungsinverter eine Rückreflexion von Teilstrahlenbündeln in Richtung Maßverkörperung erfolgt und die Teilstrahlenbündel dann eine zweite Kombination aus Maßverkörperung und zweitem Wellenfrontkorrektor durchlaufen, bevor die Teilstrahlenbündel anschließend auf die Detektoreinheit treffen. Über die Reflektoreinheit ist sichergestellt, dass die Wellenfrontdeformationen der Teilstrahlenbündel, die über die erste Beugung an der Maßverkörperung resultieren, in Wellenfrontdeformationen umgesetzt werden, die die resultierenden Wellenfrontdeformationen der Teilstrahlenbündel bei der zweiten Beugung an der Maßverkörperung kompensieren Über den ersten Wellenfrontkorrektor erfolgt eine Umwandlung der aus der ersten Kombination von Maßverkörperung und erstem Wellenfrontkorrektor austretenden Wellenfronten in kollimierte Teilstrahlenbündel mit ebenen Wellenfronten. Über den zweiten Wellenfrontkorrektor erfolgt eine Umwandlung der aus der zweiten Kombination von Maßverkörperung und zweitem Wellenfrontkorrektor austretenden Wellenfronten in kollimierte Teilstrahlenbündel mit ebenen Wellenfronten, so dass die Wellenfronten der zur Überlagerung kommenden Teilstrahlenbündel nach der zweiten Beugung an der Maßverkörperung am Überlagerungsort identisch sind. Hierbei ist vorgesehen, dass die erste Kombination von Maßverkörperung und erstem Wellenfrontkorrektor in der Reihenfolge Maßverkörperung - erster Wellenfrontkorrektor in der Strahlausbreitungsrichtung angeordnet ist und die zweite Kombination von Maßverkörperung und zweitem Wellenfrontkorrektor in der Reihenfolge zweiter Wellenfrontkorrektor - Maßverkörperung in der Strahlausbreitungsrichtung angeordnet ist.

Alternativ hierzu kann vorgesehen werden, dass die erste Kombination von Maßverkörperung und erstem Wellenfrontkorrektor in der Reihenfolge erster Wellenfrontkorrektor - Maßverkörperung in der Strahlausbreitungsrichtung angeordnet ist und die zweite Kombination von Maßverkörperung und zweitem Wellenfrontkorrektor in der Reihenfolge Maßverkörperung - zweiter Wellenfrontkorrektor in der Strahlausbreitungsrichtung angeordnet ist.

Vorzugsweise ist der Strahlrichtungsinverter dergestalt ausgebildet, dass eine Strahlrichtungsinversion bezüglich der davon reflektierten Teilstrahlenbündel in zwei orthogonalen Richtungen erfolgt.

In einer möglichen Ausführungsform kann der Strahlrichtungsinverter als Tripelspiegel oder als Tripelprisma ausgebildet sein.

Desweiteren kann der Strahlrichtungsinverter eine Kombination aus einer Linse und einem Reflektorspiegel umfassen.

Es ist möglich, dass die Wellenfrontkorrektoren und/oder die Linse des Strahlrichtungsinverters als refraktive optische Elemente ausgebildet sind.

Die Wellenfrontkorrektoren können als diffraktive optische Elemente ausgebildet sein.

Es ist ferner möglich, dass die Wellenfrontkorrektoren und die Linse des Strahlrichtungsinverters als diffraktives optisches Element ausgebildet sind.

Desweiteren kann vorgesehen werden, dass die Wellenfrontkorrektoren jeweils als diffraktive optische Kombinationselemente in Form von Abtastgittern ausgebildet sind, die ferner mindestens eine der nachfolgenden zusätzlichen optischen Funktionalitäten auf die darauf einfallenden Teilstrahlenbündel aufweisen:

- eine optische Ablenkwirkung,
- eine optische Aufspalt- oder Vereinigungswirkung,
- eine optische Fokussierungswirkung auf den Reflektorspiegel.

Dabei können der Reflektorspiegel und die diffraktiven optischen Elemente auf gegenüberliegenden Seiten einer transparenten Abtastplatte angeordnet werden.

In einer weiteren Ausführungsform ist die Maßverkörperung als Radialteilung auf einer um eine Rotationsachse rotierenden Teilscheibe ausgebildet und konzentrisch um die Rotationsachse angeordnet.

Alternativ hierzu kann vorgesehen sein, dass die Maßverkörperung als Trommelteilung auf dem Außenumfang einer rotierenden Teilungstrommel ausgebildet ist, wobei die Rotationsachse mit der Längsachse der Teilungstrommel zusammenfällt.

Von Vorteil ist hierbei , wenn die optischen Elemente in der Abtasteinheit derart ausgebildet und angeordnet sind, dass das von der Lichtquelle emittierte Strahlenbündel unter einem Winkel ungleich 90° auf die Trommelteilung einfällt.

Die Abtastoptik der erfindungsgemäßen optischen Positionsmesseinrichtung basiert somit auf der speziellen Ausbildung der Reflektoreinheit. Diese stellt sicher, dass die von der Maßverkörperung gebeugten Teilstrahlenbündel derart wieder auf die Maßverkörperung zurückreflektiert werden, dass sie anschließend bei der Überlagerung identische Wellenfronten aufweisen. Damit ist ein maximaler Interferenzkontrast bei der interferentiellen Signalerzeugung gewährleistet. Dies ist sowohl für die ideale Anbaulage der Maßverkörperung, als auch für kleine toleranzbedingte Abweichungen hiervon sichergestellt. Über die Abtastoptik der erfindungsgemäßen Positionsmesseinrichtung werden daher sowohl die nominalen als auch die toleranzbedingten Wellenfrontdeformationen zuverlässig korrigiert. Ein Signaleinbruch bei einer ggf. nicht optimalen Relativjustage von Maßverkörperung und Abtasteinheit lässt sich damit vermeiden, d.h. die gewünschte große Anbautoleranz ist gewährleistet.

Darüberhinaus lässt sich über die erfindungsgemäßen Maßnahmen eine deutliche Vereinfachung des Aufbaus der Abtastoptik erreichen, d.h. diese kann auch mit geringem Aufwand gefertigt werden.

Ferner ist zu erwähnen, dass bei Positionsmesseinrichtungen gemäß dem Stand der Technik die Wellenfrontdeformationen mit kleiner werdenden Teilungsperioden zunehmen. Aus diesem Grund war bei vorgegebenen Anbau- und Betriebstoleranzen sowie sinnvollen Abtastfeldgrößen die Teilungsperiode der Maßverkörperung und damit die Auflösung der Positionsmesseinrichtung begrenzt. Über die erfindungsgemäßen Maßnahmen können nunmehr auch kleinere Teilungsperioden auf Seiten der Maßverkörperung verwendet werden, d.h. die Auflösung lässt sich erheblich vergrößern.

Weitere Vorteile sowie Einzelheiten der vorliegenden Erfindung ergeben sich aus der nachfolgenden Beschreibung von Ausführungsbeispielen anhand der beiliegenden Figuren.

Es zeigt hierbei

| | |
|---|---|
| Figur 1a - 1e | jeweils eine unterschiedliche Darstellung zur Erläuterung der bei einer Retroreflexion auftretenden Wellenfrontdeformationen in den zur Signalgewinnung genutzten Teilstrahlenbündel; |
| Figur 2, 3a, 3b | je einen Teil des Abtaststrahlenganges einer ersten Ausführungsform der erfindungsgemäßen optischen Positionsmesseinrichtung in unterschiedlichen Ansichten; |
| Figur 4 | eine Draufsicht auf die Wellenfrontkorrektoren der ersten Ausführungsform der erfindungsgemäßen optischen Positionsmesseinrichtung; |
| Figur 5 | eine weitere Darstellung des Abtaststrahlenganges der ersten Ausführungsform der erfindungsgemäßen optischen Positionsmesseinrichtung; |
| Figur 6, 7a, 7b | je einen Teil des Abtaststrahlenganges einer zweiten Ausführungsform der erfindungsgemäßen optischen Positionsmesseinrichtung in unterschiedlichen Ansichten; |
| Figur 8 | eine schematisierte Ansicht der Wellenfrontkorrektoren der zweiten Ausführungsform der erfindungsgemäßen optischen Positionsmesseinrichtung; |
| Figur 9, 10a, 10b | je einen Teil des Abtaststrahlenganges einer dritten Ausführungsform der erfindungsgemäßen optischen Positionsmesseinrichtung in unterschiedlichen Ansichten; |
| Figur 11a, 11b | je einen Teil des Abtaststrahlenganges einer Abwandlung der dritten Ausführungsform der erfindungsgemäßen optischen Positionsmesseinrichtung in unterschiedlichen Ansichten; |
| Figur 12 | eine schematisierte Ansicht der Gitterteilungen der Ausführungsform der erfindungsgemäßen optischen Positionsmesseinrichtung aus den Figuren 11a, 11b; |
| Figur 13, 14a, 14b | je einen Teil des Abtaststrahlenganges einer vierten Ausführungsform der erfindungsgemäßen |

optischen Positionsmesseinrichtung in unterschiedlichen Ansichten;

Figur 15    eine schematisierte Darstellung des Abtaststrahlengangs einer ersten Variante der fünften Ausführungsform der erfindungsgemäßen optischen Positionsmesseinrichtung;

Figur 16    eine schematisierte Darstellung des Abtaststrahlengangs einer zweiten Variante der fünften Ausführungsform der erfindungsgemäßen optischen Positionsmesseinrichtung;

Figur 17    eine schematisierte Darstellung des Abtaststrahlengangs einer dritten Variante der fünften Ausführungsform der erfindungsgemäßen optischen Positionsmesseinrichtung;

Figur 18    verschiedene geometrische Zusammenhänge in der Variante aus Figur 17;

Figur 19, 20a, 20b    je einen Teil des Abtaststrahlenganges einer sechsten Ausführungsform der erfindungsgemäßen optischen Positionsmesseinrichtung in unterschiedlichen Ansichten;

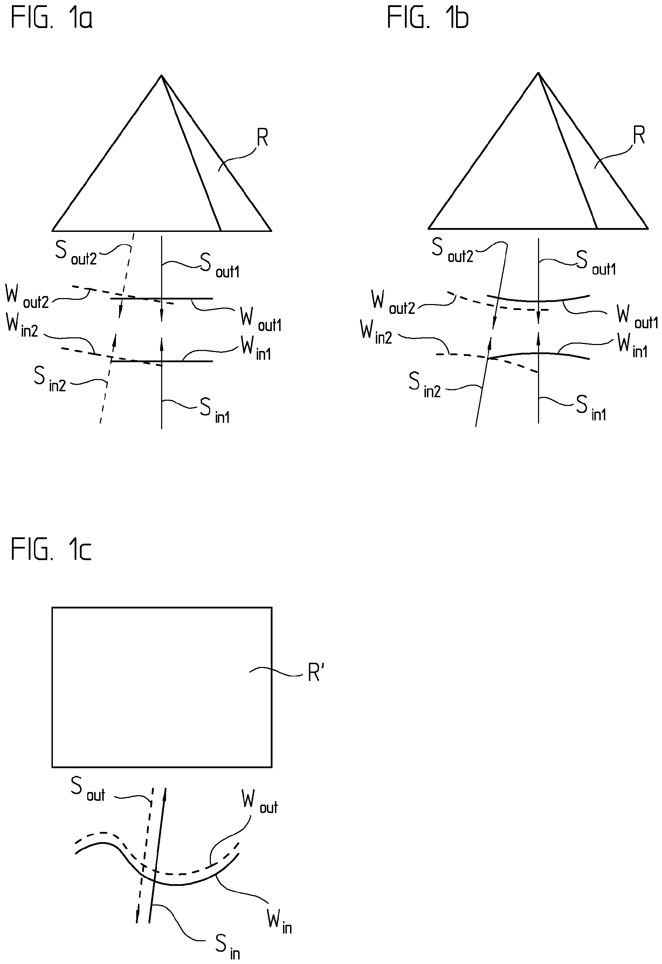

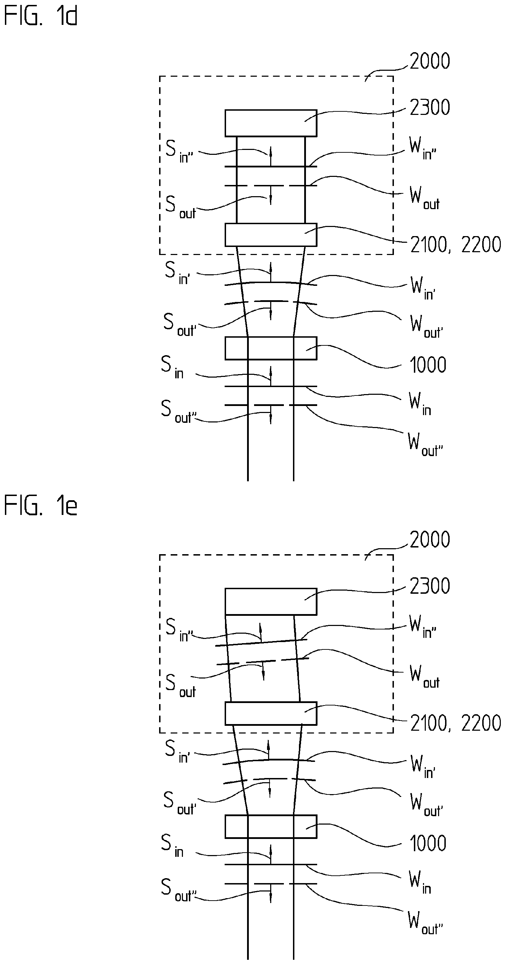

Bevor verschiedene Ausführungsbeispiele der erfindungsgemäßen optischen Positionsmesseinrichtung im Detail beschrieben werden, sei zunächst anhand der Figuren 1a - 1c die Problematik bzgl. der bei der Retroreflexion auftretenden Wellenfrontdeformationen in den zur Signalgewinnung genutzten Teilstrahlenbündeln erläutert. Anhand der Figuren 1d und 1e wird der erfindungsgemäße Lösungsansatz beschrieben.

Figur 1a veranschaulicht schematisiert den Idealfall, bei dem die zwei an der Signalgewinnung beteiligten kollimierten Teilstrahlenbündel $S_{in1}$, $S_{in2}$, die in Richtung einer als Tripelprismas ausgebildeten Reflektoreinheit R propagieren, jeweils eine ebene Wellenfront $W_{in1}$, $W_{in2}$ aufweisen. Von der Reflektoreinheit R werden diese Teilstrahlenbündel $S_{in1}$, $S_{in2}$ in Bezug auf ihre Ausbreitungsrichtungen und ihre Wellenfronten invertiert und laufen anschließend als Teilstrahlenbündel $S_{out1}$, $S_{out2}$ mit wiederum ebenen Wellenfronten $W_{out1}$, $W_{out2}$ antiparallel zur Einfallsrichtung zurück.

Wie eingangs erläutert, liegen bei den interessierenden optischen Positionsmesseinrichtungen sowohl aufgrund der zur Signalgewinnung verwendeten gekrümmten Maßverkörperungen in Form von Radialgitterteilungen bzw. Trommelteilungen als auch aufgrund eines eventuellen fehlerhaften Anbaus der Maßverkörperung deformierte, nicht ebene Wellenfronten $W_{in1}$, $W_{in2}$ in den beiden an der Signalgewinnung beteiligten Teilstrahlenbündeln $S_{in1}$, $S_{in2}$ vor. Dieser Fall ist in Figur 1b veranschaulicht. Bei der Retroreflexion über die Reflektoreinheit werden die nicht-ebenen Wellenfronten nun nicht mehr invertiert, wie aus Figur 1b ersichtlich ist. Das heißt, eine in Ausbreitungsrichtung betrachtete konvexe (konkave) Wellenfront bleibt nach der Retroreflexion eine konvexe (konkave) Wellenfront. Es verbleiben somit erhebliche Deformationen in den Wellenfronten $W_{out1}$, $W_{out2}$ der ausfallenden Teilstrahlenbündel $S_{out1}$, $S_{out2}$. Bei der nachfolgenden - nicht dargestellten - Überlagerung dieser Teilstrahlenbündel $S_{out1}$, $S_{out2}$ resultiert deshalb nur ein sehr geringer Interferenzkontrast; eine nur sehr geringe Signalstärke in den erzeugten Positionssignalen ist die unerwünschte Folge.

Wünschenswert wäre hingegen eine Reflektoreinheit R', die eine optische Wirkung auf ein oder mehrere einfallende Teilstrahlenbündel $S_{in}$ aufweist, wie dies in Figur 1c dargestellt ist. Die Reflektoreinheit R' sollte demzufolge jegliche beliebig deformierte Wellenfront $W_{in}$ eines einfallenden Teilstrahlenbündels $S_{in}$ invertieren. Insbesondere sollte die Strahlrichtung des einfallenden Teilstrahlenbündels $S_{in}$ invertiert werden, ohne den Strahlort zu verändern, so dass das einfallende Teilstrahlenbündel wie ersichtlich nach der Retroreflexion wieder in sich zurückläuft.

Derartige ideale Reflektoreinheiten werden als phasenkonjugierende Elemente bezeichnet und sind nur mit Mitteln der nichtlinearen Optik erzielbar, was aufgrund anderer Nachteile in einer optischen Positionsmesseinrichtung nicht praktikabel ist.

Gemäß der vorliegenden Erfindung ist daher eine Lösung vorgesehen, wie sie in den Figuren 1d und 1e stark schematisiert angedeutet ist. Figur 1d zeigt hierbei die optische Wirkung einer erfindungsgemäß ausgebildeten Reflektoreinheit 2000 auf ein darauf von der Maßverkörperung 1000 (Radialteilung oder Trommelteilung) her einfallendes Teilstrahlenbündel $S_{in}$ bzw. dessen Wellenfront $W_{in}$ für den Fall eines idealen Anbaus der Maßverkörperung 1000. In Figur 1e sind die entsprechenden Verhältnisse für den Fall einer nicht ideal angebauten Maßverkörperung 1000 veranschaulicht.

Gemäß Figur 1d erfährt die Wellenfront $W_{in}$ des einfallenden Teilstrahlenbündels $S_{in}$ an der gekrümmt als Radialteilung oder Trommelteilung ausgebildeten Maßverkörperung 1000 bei der ersten Beugung eine Verzerrung der ursprünglich ebenen Wellenfront $W_{in}$ in eine deformierte bzw. gekrümmte Wellenfront $W_{in}'$. Das entsprechende Teilstrahlenbündel $S_{in}'$ propagiert dann in Richtung der erfindungsgemäß ausgebildeten Reflektoreinheit 2000, die prinzipiell einen ersten Wellenfrontkorrektor 2100, einen Strahlrichtungsinverter 2300 sowie einen zweiten Wellenfrontkorrektor 2200 umfasst. In der Figur 1d sind die beiden Wellenfrontkorrektoren 2100, 2200 der Einfachheit halber als einziges optisches Bauelement dargestellt, in der konkreten Realisierung einer erfindungsgemäßen optischen Positionsmesseinrichtung sind hierzu üblicherweise zwei separate Bauelemente vorgesehen.

Über den ersten Wellenfrontkorrektor 2100 erfolgt zunächst eine Umwandlung des darauf einfallenden Teilstrahlenbündels $S_{in}$' mit der deformierten Wellenfront $W_{in}$' in ein Teilstrahlenbündel $S_{in}$'' mit einer ebenen Wellenfront $W_{in}$''. Das Teilstrahlenbündel $S_{in}$'' gelangt dann auf den Strahlrichtungsinverter 2300, der das darauf einfallende Teilstrahlenbündel $S_{in}$'' als ausfallendes Teilstrahlenbündel $S_{out}$ mit einer ebenen Wellenfront $W_{out}$ retroreflektiert, d.h. in die Einfallsrichtung zurückreflektiert.

Anschließend durchläuft dieses Teilstrahlenbündel $S_{out}$ den zweiten Wellenfrontkorrektor 2200, der das einfallende Teilstrahlenbündel $S_{out}$ mit der ebenen Wellenfront $W_{out}$ in ein Teilstrahlenbündel $S_{out}$' mit einer definiert deformierten Wellenfront $W_{out}$' umwandelt. Die dabei resultierende Wellenfrontdeformation über den zweiten Wellenfrontkorrektor 2200 erfolgt dergestalt, dass diese die nach der anschließend erfolgenden zweiten Beugung an der Maßverkörperung 1000 auftretende Wellenfrontdeformation kompensiert. Nach der zweiten Beugung an der Maßverkörperung 2000 propagiert somit ein Teilstrahlenbündel Sout'' mit einer ebenen Wellenfront $W_{out}$'' weiter. Analog hierzu wirkt die Reflektoreinheit 2000 auf ein weiteres - nicht dargestelltes - Teilstrahlenbündel, so dass nach der zweiten Beugung an der Maßverkörperung 1000 schließlich zwei Teilstrahlenbündel mit ebenen Wellenfronten zur interferierenden Überlagerung gebracht werden können.

In Figur 1e ist der hierzu analoge Wirkungsmechanismus der Reflektoreinheit 2000 für den Fall dargestellt, dass die Maßverkörperung 1000 nicht ideal angebaut ist, so dass neben den nominalen Wellenfrontdeformationen noch zusätzlich toleranzbedingte Wellenfrontdeformationen in den zur Signalerzeugung genutzten Teilstrahlenbündeln vorliegen. Diese zusätzliche Wellenfrontdeformation ist in Figur 1e durch die verkippte Wellenfront $W_{in}$' des Teilstrahlenbündels $S_{in}$' nach der ersten Beugung an der Maßverkörperung 1000 angedeutet. Beim Durchgang durch den ersten Wellenfrontkorrektur 2100 wird die deformierte Wellenfront $W_{in}$' des Teilstrahlenbündels $S_{in}$' in eine ebene Wellenfront $W_{in}$'' umgewandelt, daraufhin das Teilstrahlenbündel $W_{in}$'' vom Strahlrichtungsinverter 2300 retroreflektiert. Das retroreflektierte Teilstrahlenbündel $S_{out}$ mit der Wellenfront $W_{out}$ gelangt daraufhin auf den zweiten Wellenfrontkorrektor 2200. Dieser transformiert die einfallende Wellenfront $W_{out}$ des Teilstrahlenbündels $S_{out}$ dann wiederum in definierter Art und Weise, so dass ein Teilstrahlenbündel $S_{out}$ mit der entsprechend deformierten Wellenfront $W_{out}$' in Richtung der Maßverkörperung 1000 weiterpropagiert. Aufgrund der definierten Wellenfrontverzerrung über den zweiten Wellenfrontkorrektor 2200 resultiert nach der zweiten Beugung an der Maßverkörperung 1000 schließlich das ausfallende Teilstrahlenbündel $S_{out}$'' mit einer ebenen Wellenfront $W_{out}$'', welches wiederum mit einem weiteren - nicht dargestellten - Teilstrahlenbündel zur interferierenden Überlagerung gebracht werden kann.

Die in Figur 1e dargestellte Reflektoreinheit 2000 liefert nur dann ebene Wellenfronten der ausfallenden Teilstrahlenbündel $S_{out}$'', wenn die toleranzbedingte Wellenfrontdeformation nur als Verkippung der Wellenfront auftritt und nicht als zusätzliche Krümmung der Wellenfront. In diesem Punkt unterscheidet sich die Reflektoreinheit 2000 aus der Figur 1e von der Reflektoreinheit R' aus Figur 1c. In der Praxis ist aber der dominante Anteil der toleranzbedingten Wellenfrontdeformation eine Kippung der Wellenfront, so dass die erfindungsgemäß ausgebildete Reflektoreinheit 2000 aus Figur 1e die letztlich gewünschte optische Wirkung zeigt.

Basierend auf den vorab erläuterten Prinzipien und Überlegungen werden im Folgenden nun mehrere konkrete Ausführungsbeispiele der erfindungsgemäßen optischen Positionsmesseinrichtung beschrieben.

Erstes Ausführungsbeispiel

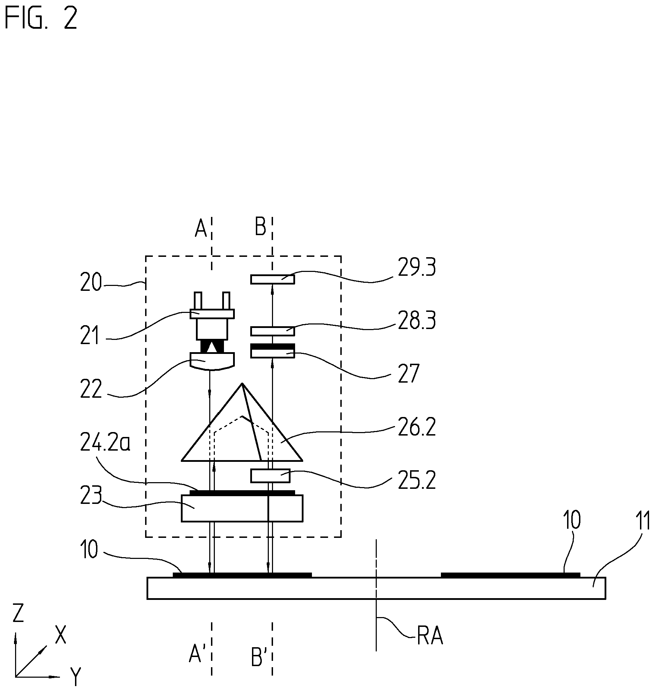

Ein erstes Ausführungsbeispiel der erfindungsgemäßen optischen Positionsmesseinrichtung sei nachfolgend anhand der Figuren 2 - 5 erläutert.

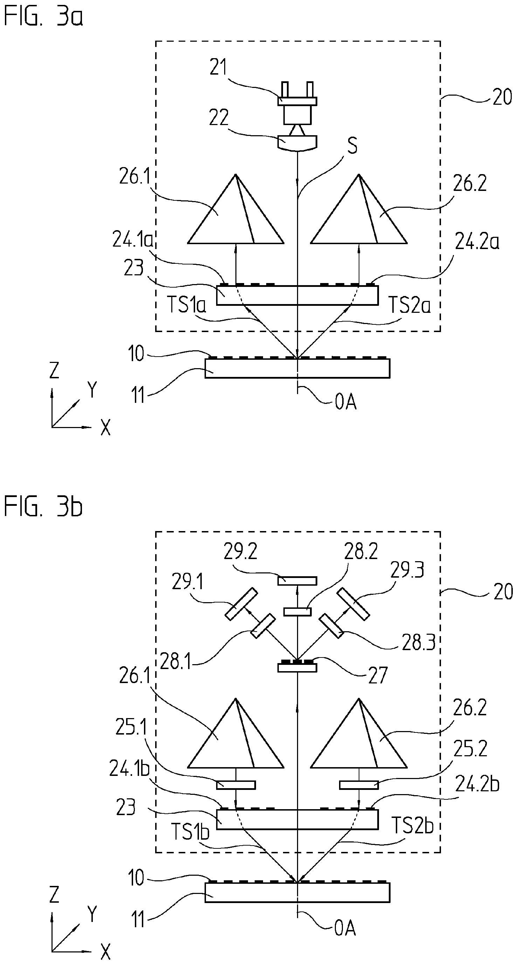

Der prinzipielle Abtaststrahlengang dieses Ausführungsbeispiels wird zunächst mit Hilfe der Figuren 2, 3a und 3b beschrieben. Figur 2 zeigt eine radiale Ansicht der entsprechenden optischen Positionsmesseinrichtung in der y-z-Ebene; senkrecht zu dieser Ebene ist die (gekrümmte) Messrichtung x orientiert. Die Figuren 3a und 3b zeigen tangentiale Schnittansichten der optischen Positionsmesseinrichtung entlang den in Figur 2 angedeuteten Schnittlinien AA' bzw. BB'.

Die dargestellte optische Positionsmesseinrichtung umfasst eine Abtasteinheit 20 sowie eine hierzu entlang der gekrümmten Messrichtung x bewegliche Maßverkörperung 10. Die Maßverkörperung 10 ist in diesem Fall als Radialteilung ausgebildet, die auf einer Teilscheibe 11 angeordnet ist. Die Teilscheibe 11 rotiert um die Rotationsachse RA, um die konzentrisch die Maßverkörperung 10 bzw. die Radialteilung angeordnet ist.

Aus der optischen Abtastung der Maßverkörperung 10 werden hochgenaue Positionssignale bezüglich der Rotationsbewegung von Abtasteinheit 20 und Maßverkörperung 10 erzeugt. Die Abtasteinheit 20 und die Maßverkörperung 10 sind hierbei z.B. mit - nicht dargestellten - gegeneinander um die Rotationsachse RA rotierenden Maschinenteilen verbunden. Die mit Hilfe der erfindungsgemäßen Vorrichtung erzeugten Positionssignale werden einer - ebenfalls nicht dargestellten - Folgeelektronik zugeführt, die darüber z.B. die Positionierung der entsprechenden Maschinenteile steuert.

Die Maßverkörperung 10 ist in bekannter Art und Weise als Reflexionsteilung ausgebildet, die radial zur Rotationsachse RA periodisch angeordnete sektorförmige, längliche Teilungsstrukturen mit alternierenden Reflexionseigenschaften aufweist. Typische Teilungsperioden geeigneter Maßverkörperungen 10 betragen etwa 1 - 4μm.

Die im vorliegenden Beispiel stationär angeordnete Abtasteinheit 20 umfasst eine Reihe optischer Elemente, deren einzelne Funktionen in der nachfolgenden Beschreibung des Abtaststrahlengangs zur Erzeugung der verschiebungsabhängigen Positionssignale erläutert werden.

Ein von einer Lichtquelle 21 emittiertes linear-polarisiertes Strahlenbündel S wird zunächst über eine Kollimatoroptik 22 kollimiert und gelangt auf die Maßverkörperung 10 bzw. Radialteilung auf der um die Rotationsachse RA beweglichen Teilscheibe 11. Als Lichtquelle kann z.B. eine Laserdiode eingesetzt werden, die Strahlung mit der Wellenlänge λ = 780nm emittiert.

Es sei darauf hingewiesen, dass die Lichtquelle 21 in der erfindungsgemäßen optischen Positionsmesseinrichtung grundsätzlich nicht unmittelbar in der Abtasteinheit angeordnet sein muss; alternativ zur dargestellten Variante könnte auch vorgesehen werden, die Lichtquelle extern anzuordnen und deren emittierte Strahlung der Abtasteinheit über geeignete Lichtwellenleiter zuzuführen.

Durch die auf der Maßverkörperung 10 resultierende Beugung in +1. und -1. Beugungsordnungen werden zwei Teilstrahlenbündel TS1a, TS2a erzeugt, die in Richtung der Abtasteinheit 20 zurückreflektiert werden. Diese Teilstrahlenbündel TS1a, TS2a weisen aufgrund der Ausbildung der Maßverkörperung 10 entlang einer gekrümmten Linie nominale Wellenfrontdeformationen als auch ggf. toleranzbedingte Wellenfrontdeformationen aufgrund des nicht-idealen Anbaus der Maßverkörperung 10 auf.

In der Abtasteinheit 20 gelangen die Teilstrahlenbündel TS1a, TS2a auf erste Wellenfrontkorrektoren 24.1a, 24.2a, die auf einer Seite einer Abtastplatte 23 angeordnet sind. Über die ersten Wellenfrontkorrektoren 24.1a, 24.2a werden die deformierten Wellenfronten der Teilstrahlenbündel TS1a, TS2a korrigiert. Anschließend propagieren kollimierte Teilstrahlenbündel TS1a, TS2a mit ebenen Wellenfronten in Richtung der Strahlrichtungsinverter 26.1, 26.2 weiter. Die Strahlrichtungsinverter 26.1, 26.2 sind im vorliegenden Beispiel als Tripelprismen ausgebildet, die die einfallenden Teilstrahlenbündel TS1a, TS2a als austretende Teilstrahlenbündel TS1b, TS2b in Richtung der Maßverkörperung 10 zurückreflektieren. Hierbei werden die Teilstrahlenbündel TS1b, TS2b in radialer Richtung, d.h. in der angegebenen y-Richtung versetzt, wie dies etwa aus Figur 2 ersichtlich ist. Danach durchtreten die beiden Teilstrahlenbündel TS1b, TS2b Lambda/4-Platten 25.1, 25.2, über die die beiden ursprünglich linear-polarisierten Teilstrahlenbündel TS1b, TS2b in rechts- und linkszirkular polarisierte Teilstrahlenbündel TS1b, TS2b umgewandelt werden. Anschließend gelangen die Teilstrahlenbündel TS1b, TS2b auf die zweiten Wellenfrontkorrektoren 24.1b, 24.2b. Diese verzerren die Wellenfronten der beiden Teilstrahlenbündel TS1b, TS2b dergestalt, dass nach der zweiten Beugung an der Maßverkörperung 10 beide Teilstrahlenbündel TS1b, TS2b wieder kollimiert sind und kollinear am Überlagerungsort überlagert werden.

Anschließend erfolgt die Detektion phasenverschobener Positionssignale aus dem Paar überlagerter Teilstrahlenbündel TS1b, TS2b. Die beiden Teilstrahlenbündel TS1b, TS2b propagieren hierzu nach der zweiten Beugung an der Maßverkörperung 10 kollinear in Richtung der Abtasteinheit 20, wo sie auf ein Aufspaltgitter 27 auftreffen. Das Aufspaltgitter 27 spaltet die beiden einfallenden, überlagerten Teilstrahlenbündel TS1b, TS2b in drei weitere Paare von Teilstrahlenbündeln auf, die in Richtung einer Detektoreinheit propagieren und auf in unterschiedlichen Raumrichtungen angeordnete Polarisatoren 28.1 - 28.3 gelangen, welche unterschiedliche Polarisationsrichtungen besitzen. Über den Polarisatoren 28.1 - 28.3 nachgeordnete Detektorelemente 29.1 - 29.3 erfolgt schließlich die Detektion der phasenverschobenen Positionssignale; im vorliegenden Beispiel resultieren hierbei drei um 120° phasenverschobene Positionssignale. Die Detektoreinheit umfasst in diesem Ausführungsbeispiel demzufolge neben den Detektorelementen 29.1 - 29.3 noch die Polarisatoren 28.1 - 28.3 und das Aufspaltgitter 27.

Gemäß der vorhergehenden Beschreibung des Abtaststrahlengangs werden erfindungsgemäß Reflektoreinheiten eingesetzt, die jeweils erste und zweite Wellenfrontkorrektoren 24.1a, 24.1b, 24.2a, 24.2b sowie einen dazwischen angeordneten Strahlrichtungsinverter 26.1, 26.2 umfassen. Die Reflektoreinheit bzw. die entsprechenden Komponenten derselben üben definierte optische Wirkungen auf die einfallenden Teilstrahlenbündel TS1a, TS2a bzw. TS1b, TS2b mit den verzerrten Wellenfronten aus. Über die entsprechenden optischen Wirkungen ist sichergestellt, dass durch die vorhandenen Wellenfrontdeformationen in den zur Signalgewinnung genutzten Teilstrahlenbündeln TS1a, TS2a bzw. TS1b, TS2b keine Verschlechterung der Signalqualität resultiert.

So erfolgt über die ersten Wellenfrontkorrektoren 24.1a, 24.2a eine Umwandlung der deformierten Wellenfronten der darauf einfallenden Teilstrahlenbündel TS1a, TS2a in kollimierte Teilstrahlenbündel mit ebenen Wellenfronten; über die zweiten Wellenfrontkorrektoren 24.1b, 24.2b erfolgt eine Verzerrung der ebenen Wellenfronten der darauf einfallenden Teilstrahlenbündel TS1b, TS2b dergestalt, dass die Wellenfronten der zur Überlagerung kommenden Teilstrahlenbündel TS1b, TS2b nach der zweiten Beugung an der Maßverkörperung 10 am Überlagerungsort identisch sind.

Ferner sind die verwendeten Strahlrichtungsinverter 26.1, 26.2 im vorliegenden Beispiel dergestalt ausgebildet, dass eine Strahlrichtungsinversion bezüglich der davon reflektierten Teilstrahlenbündel TS1a, TS2a in radialer und tangentialer Richtung erfolgt, d.h. in den angegebenen y- und x-Richtungen, die orthogonal zueinander orientiert sind.

Über eine derartige Ausbildung der Reflektoreinheit wird demzufolge sichergestellt, dass eine eventuelle Wellenfrontdeformation in den Teilstrahlenbündeln TS1a, TS2a, die durch die erste Beugung an der Maßverkörperung 10 resultiert, in eine Wellenfrontdeformation in den Teilstrahlenbündeln TS1b, TS2b umgesetzt wird, die die Wellenfrontdeformation aufgrund der zweiten Beugung an der Maßverkörperung 10 kompensiert.

Als Strahlrichtungsinverter 26.1, 26.2 mit retroreflektierender optischer Wirkung sind in den Reflektoreinheiten des vorliegenden Ausführungsbeispiels Tripelprismen vorgesehen; alternativ hierzu wäre etwa auch die Verwendung von Tripelspiegeln an dieser Stelle möglich.

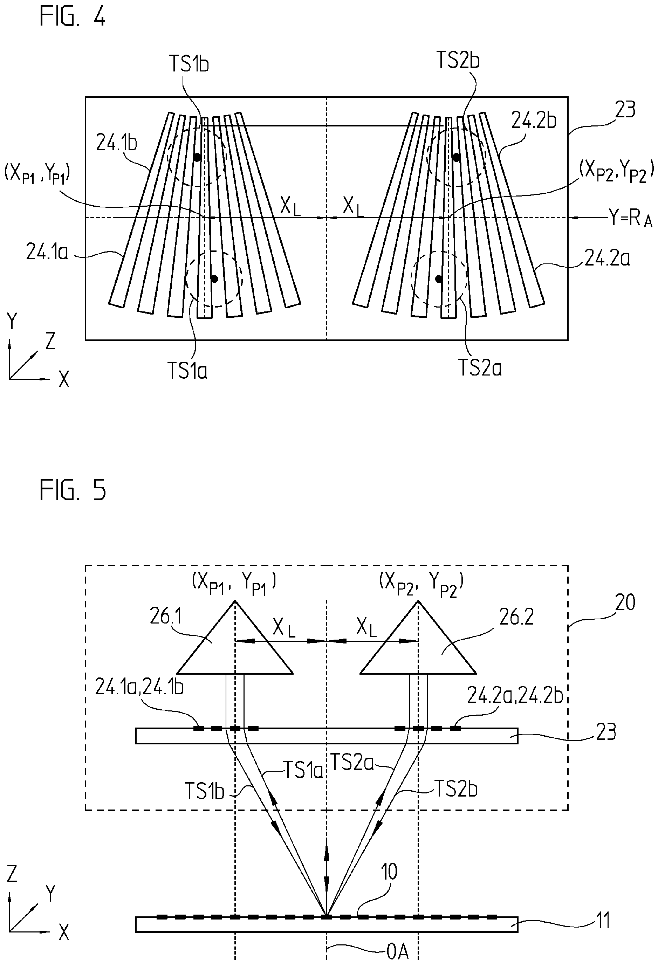

Die Wellenfrontkorrektoren 24.1a, 24.1b, 24.2a, 24.2b sind im dargestellten ersten Ausführungsbeispiel als diffraktive optische Elemente in Form von Abtastgittern ausgebildet. Weitere Details hierzu seien anhand von Figur 4 erläutert, die eine Draufsicht auf eine Abtastplatte 23 mit den darauf angeordneten vier Wellenfrontkorrektoren 24.1a, 24.1b, 24.2a, 24.2b zeigt.

In guter Näherung ist es möglich, die Wellenfrontkorrektoren 24.1a, 24.1b, 24.2a, 24.2b als radiale Abtastgitter mit derselben Teilungsperiode wie die radiale Maßverkörperung 10 auf der Teilscheibe 11 auszubilden. Dabei sind die als radiale Abtastgitter ausgebildeten Wellenfrontkorrektoren 24.1a, 24.1b auf der Abtastplatte 23 gegenüber der als Radialteilung ausgebildeten Maßverkörperung 10 auf der Teilscheibe 11 um den Versatzabstand $\Delta x = -x_L$ parallel versetzt angeordnet. Der Versatzabstand $\Delta x$ bezeichnet hierbei den in der Messrichtung x bestimmten Abstand eines mittig im Strahlenbündel liegenden Teilungsstrichs der Maßverkörperung 10 zu einem dazu parallelen Gitterstrich des Wellenfrontkorrektors 24.1a, 24.1b. Die Wellenfrontkorrektoren 24.2a, 24.2b sind hingegen um den Versatzabstand $\Delta x = +x_L$ versetzt angeordnet. Der erforderliche Versatzabstand $|\Delta x| = x_L$ wird durch die Strahlablenkung des Radialgitters auf der Teilscheibe 11 am mittleren Abtastradius $R_A$ in Höhe der Abtastplatte 23 gemäß der folgenden Gleichung 1 bestimmt:

$$x_L = \frac{D}{\sqrt{\left(\frac{2\pi R_A}{N\lambda}\right)^2 - 1}} \qquad \text{(Gl. 1)}$$

mit:

D :=    effektiver Abtastabstand zwischen der Maßverkörperung und den Wellenfrontkorrektoren
$R_A$ :=    mittlerer Abtastradius
$\lambda$ :=    Wellenlänge der Lichtquelle
N :=    Zahl der Striche der Maßverkörperung auf der Teilscheibe

Die diffraktiven optischen Elemente auf der Abtastplatte 23 bzw. die entsprechenden radialen Abtastgitter, über die die Wellenfrontkorrektoren 24.1a, 24.1b, 24.2a, 24.2b ausgebildet werden, sind vorzugsweise als Phasenstrukturen ausgeführt. In einer einfachen Variante sind z.B. Phasenstrukturen mit einer Phasentiefe von 180° und einer lokalen Stegbreite vorgesehen, die gleich der lokalen Lückenbreite ist. Alternativ hierzu könnten auch geblazte Phasenstrukturen verwendet werden. Über diese sind auch nicht benötigte Beugungsordnungen unterdrückbar, wodurch eine weitere Erhöhung der Signalstärken in den erzeugten Positionssignalen realisierbar ist.

Neben der bislang diskutierten optischen Funktionalität weisen die Wellenfrontkorrektoren 24.1a, 24.1b, 24.2a, 24.2b des vorliegenden Ausführungsbeispiels eine weitere optische Wirkung auf. So besitzen diese auch eine mittlere optische Ablenkwirkung dergestalt, dass die darauf einfallenden Teilstrahlenbündel TS1a, TS2a bzw. TS1b, TS2b parallel zur optischen Achse OA abgelenkt werden. Im folgenden sei daher in Bezug auf die Wellenfrontkorrektoren auch von diffraktiven optischen Kombinationselementen in Form von Abtastgittern die Rede.

Wie aus Figur 4 und der Ansicht in Figur 5 ersichtlich ist, sind die Teilstrahlenbündel TS1a bzw. TS2a in Höhe der Abtastplatte 23 jeweils gegenüber den Teilstrahlenbündeln TS1b bzw. TS2b in x-Richtung leicht nach innen versetzt. Dieser Versatz gewährleistet, dass bei den radial unterschiedlichen lokalen Gitterkonstanten und damit auch unterschiedlichen Ablenkwinkeln die Teilstrahlenbündel TS1b und TS2b sich am selben Ort, d.h. dem Überlagerungsort, auf der Maßverkörperung 10 treffen und damit ohne Strahlversatz überlagert werden. Die entsprechend optimierte Lage $(X_{P1}, Y_{P1})$ bzw. $(X_{P2}, Y_{P2})$ der Strahlrichtungsinverter 26.1, 26.2 bzw. der in diesem Beispiel hierzu vorgesehenen Tripelprismen ergibt sich gemäß den nachfolgenden Beziehungen 2.1 - 2.3:

$$X_{P1} = -X_L \qquad \text{(Gl. 2.1)}$$

$$X_{P2} = +X_L \qquad \text{(Gl. 2.2)}$$

$$Y_{P1} = Y_{P2} = R_A \qquad \text{(Gl. 2.3)}$$

Diese Beziehungen 2.1 - 2.3 gelten für ein Koordinatensystem, dessen Zentrum in der Mitte der Teilscheibe 11 liegt, dessen x-Achse mit der Messrichtung x übereinstimmt und dessen z-Achse orthogonal zur Maßverkörperung 10 orientiert ist. Dieses Koordinatensystem wird auch im Verlauf der weiteren Beschreibung verwendet.

In der x-y-Ebene der Figur 4 liegen damit die Spitzen der als Tripelprismen ausgebildeten Strahlrichtungsinverter 26.1, 26.2 symmetrisch zwischen den Auftrefforten der Teilstrahlenbündel TS1a und TS1b bzw. TS2a und TS2b auf den Wellenfrontkorrektoren 24.1a, 24.1b, 24.2a, 24.2b.

Die Wellenfronten der Strahlenbündel TS1a und TS2a am Ort der ersten Wellenfrontkorrektoren 24.1a, 24.2a lassen sich auf bekannte Art und Weise numerisch über sog. Raytracing-Methoden oder über Wellenpropagation bestimmen. Wenn man die Gitterphase der Wellenfrontkorrektoren 24.1a bzw. 24.2a diesen Wellenfronten gleichsetzt, können noch idealere diffraktive Strukturen berechnet werden. Es ergeben sich daraus leicht verzerrte und wiederum versetzte radiale Abtastgitterstrukturen. Derart optimierte Wellenfrontkorrektoren 24.1a und 24.2a erzeugen in der Nenneinbaulage ideal ebene Wellenfronten in den an der Signalgewinnung beteiligten Teilstrahlenbündeln.

Auch die zweiten Wellenfrontkorrektoren 24.1b bzw. 24.2b können auf analoge Weise optimiert werden. Dazu werden die Wellenfronten mittels Rückwärtspropagation von ideal kollimierten Teilstrahlenbündeln ausgehend von der Detektoreinheit über die Maßverkörperung 10 bzw. Radialteilung der Teilscheibe 11 zurück zu den Wellenfrontkorrektoren 24.1b bzw. 24.2b berechnet und die Gitterphasen der Wellenfrontkorrektoren 24.1b bzw. 24.2b diesen Wellenfronten wiederum gleich gesetzt. Die dabei eingesetzten Berechnungsmethoden sind aus der einschlägigen Literatur bzgl. diffraktiver optischer Elemente bekannt. Die genauen Berechnungen ergeben wiederum leicht verzerrte und versetzte radiale Abtastgitterstrukturen.

Da die Strahlrichtungsinverter 26.1, 26.2 bzw. die hierzu vorgesehenen Tripelprismen ebene Wellenfronten wieder in ebene Wellenfronten umwandeln, wird die Wellenfrontkorrektur durch sie nicht gestört. Beim Durchlauf durch den Wellenfrontkorrektor 24.1b bzw. 24.2b wird daher die Wellenfront so vorverzerrt, dass nach der zweiten Beugung an der Maßverkörperung 10 für beide Teilstrahlenbündel TS1b, TS2b eine ebene Wellenfront resultiert.

Über die erfindungsgemäß ausgebildete Reflektoreinheit lässt sich somit eine vollständige Wellenfrontkorrektur in der Nenneinbaulage aller Komponenten der Positionsmesseinrichtung (nominale Wellenfrontkorrektur) und damit maximaler Interferenzkontrast und maximale Signalstärke der erzeugten Positionssignale sicherstellen. Gegenüber der aus dem Stand der Technik bekannten Wellenfrontkorrektur mit sphärischen Linsen und Dachkantprisma stellt dies eine deutliche Verbesserung dar.

Eine wichtige weitere Forderung an die Reflektoreinheit ist, dass darüber die Wellenfronten selbst dann korrigierbar sein sollten, wenn die Maßverkörperung 10 bzw. die Teilscheibe leicht aus der Nenneinbaulage verschoben oder verkippt wird. Dabei sind vor allem die radiale und die tangentiale Verschiebung der Maßverkörperung 10 besonders kritisch für die resultierende Signalqualität. Im Rahmen der vorliegenden Erfindung wurde erkannt, dass insbesondere durch die Wahl eines geeigneten Strahlrichtungsinverters 26.1, 26.2 in der Reflektoreinheit derart verursachte Wellenfrontdeformationen korrigiert werden können. So eignet sich als idealer Strahlrichtungsinverter ein Retroreflektorelement wie z.B. beispielsweise das im vorliegenden ersten Ausführungsbeispiel vorgesehene Tripelprisma. Dieses überführt die durch die Wellenfrontgradienten bestimmten Strahlneigungen der einfallenden Teilstrahlenbündel in gleiche Strahlneigungen der austretenden Teilstrahlenbündel. Auf diese Weise werden die zusätzlichen, durch kleine Anbaufehler entstehenden Wellenfrontdeformationen der beiden interferierenden Teilstrahlenbündel korrigiert (toleranzbedingte Wellenfrontkorrektur). Der deutlich erhöhte Interferenzkontrast führt zu einem geringen, toleranzbedingten Signalstärkeabfall in den Positionssignalen oder umgekehrt zu großen Anbautoleranzen. Insbesondere die radiale und die tangentiale Anbautoleranz wird dergestalt gegenüber den aus dem Stand der Technik bekannten Lösungen erheblich vergrößert. Neben den im ersten Ausführungsbeispiel vorgesehenen Tripelprismen kann hierbei auch eine alternative Ausbildung der Strahlrichtungsinverter 26.1 ,26.2 vorgesehen werden, wie dies anhand der nachfolgenden Beispiele noch erläutert wird.

Zweites Ausführungsbeispiel

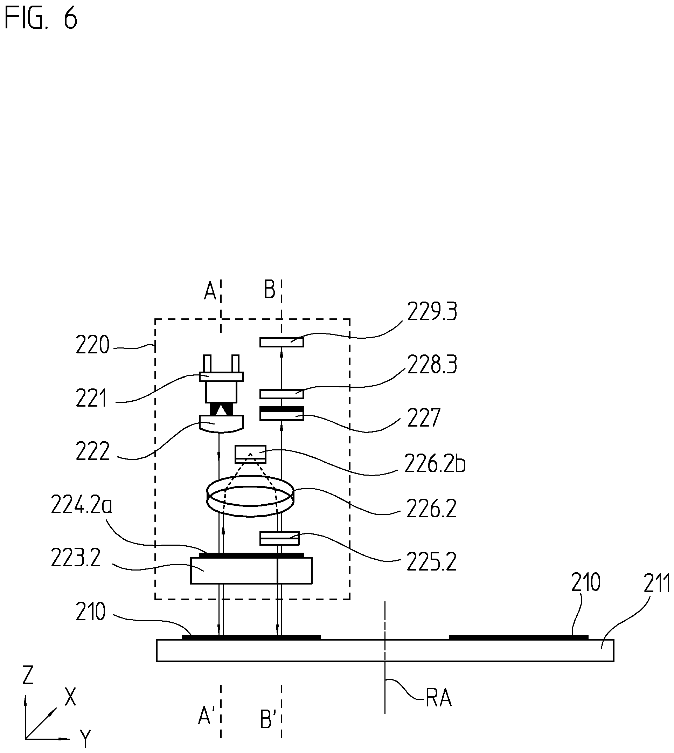

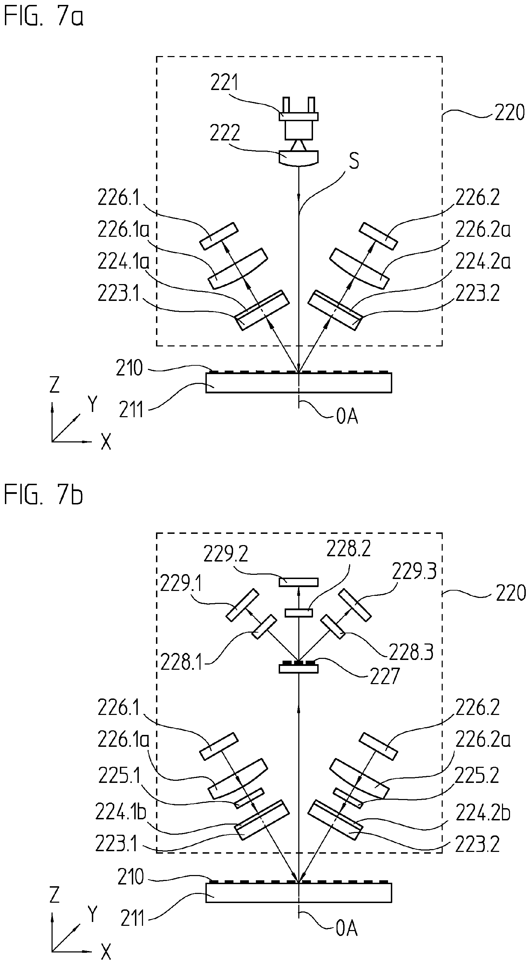

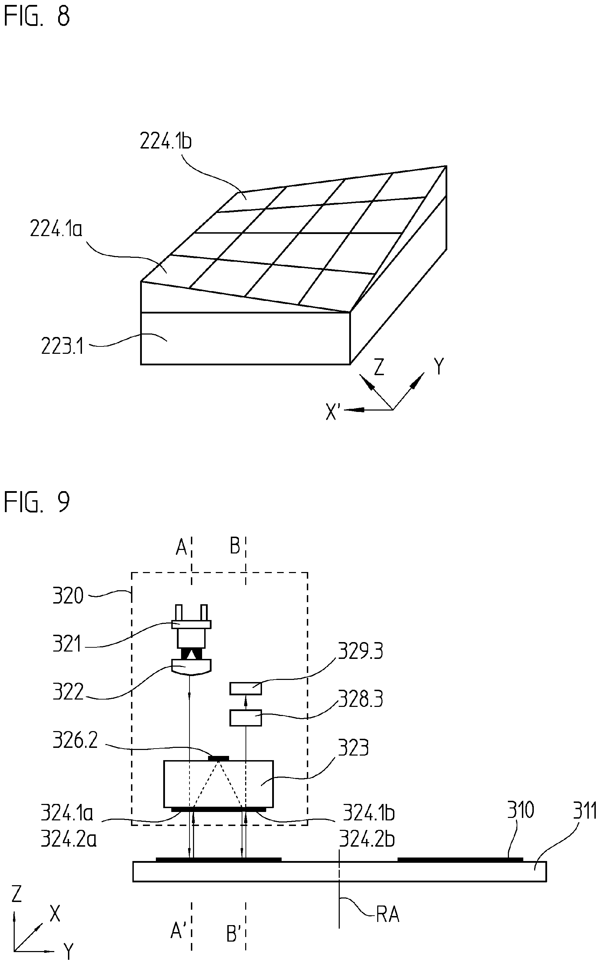

Der Abtaststrahlengang eines zweiten Ausführungsbeispiels der erfindungsgemäßen optischen Positionsmesseinrichtung ist in den Figuren 6, 7a und 7b schematisiert dargestellt; diese Figuren entsprechen hierbei den Abtaststrahlengangdarstellungen des ersten Ausführungsbeispiels. In Figur 8 ist ein Wellenfrontkorrektor für die zweite Ausführungsform der erfindungsgemäßen optischen Positionsmesseinrichtung gezeigt. Nachfolgend sei lediglich auf die maßgeblichen Unterschiede zum bereits detailliert erläuterten ersten Beispiel eingegangen.

So ist nunmehr zum einen vorgesehen, die im ersten Ausführungsbeispiel als Tripelprismen ausgebildeten Strahlrichtungsinverter alternativ auszugestalten. Demzufolge werden im zweiten Ausführungsbeispiel die Strahlrichtungsinverter jeweils als Kombination aus einer sphärischen Linse 226.1a, 226.2a und einem im Brennpunkt der Linse angeordneten Reflektorspiegel 226.1, 226.2 ausgebildet. Im Strahlenverlauf werden hierbei in Strahlausbreitungsrichtung zunächst die Linse 226.1a, 226.2a, dann der Reflektorspiegel 226.1, 226.2 und schließlich wieder die Linse 226.1a, 226.2a durchlaufen.

Desweiteren sind die Wellenfrontkorrektoren 224.1a, 224b, 224.2a, 224.2b der Reflektoreinheiten nicht als diffraktive optische Elemente in Form von Abtastgittern ausgeführt, sondern als refraktive optische Elemente. Diese weisen im Gegensatz zum ersten Ausführungsbeispiel zudem keine mittlere optische Ablenkfunktion auf, um den Strahlengang parallel zur optischen Achse OA zu richten. Vielmehr bleibt in der x-z-Ebene die mittlere Strahlrichtung von der Maßverkörperung 210 bis zu den Reflektorspiegeln 226.1, 226.2 erhalten.

In Figur 8 sind in schematischer Form zwei Wellenfrontkorrektoren 224.1a, 224.1b dieses Ausführungsbeispiels dargestellt. Die erforderliche Wellenfrontkorrektur wird hier durch eine kleine, ortsabhängige (lokale) Ablenkfunktion bewirkt, die durch die Brechung an der Sattelform auf der Abtastplatte 223.1 mit ihrer unterschiedlichen Oberflächenneigung erreicht wird und derjenigen der diffraktiven optischen Elemente bzw. Abtastgitter des ersten Ausführungsbeispiels gleicht. Mit abnehmender radialer Position (zunehmende y-Werte) wird die tangentiale Ablenkung in Richtung der optischen Achse OA stärker.

Die Herstellung der refraktiven Wellenfrontkorrektoren 224.1a, 224.1b kann z.B. durch Pressen der entsprechenden Bauelemente in eine geeignete Negativform oder durch Fräsen und nachfolgendes lokales Polieren erfolgen. Weiterhin könnte auch ein rechteckförmiger Glasstab durch Heißverformen zu einer Wendel gedreht werden und anschließend rückseitig plangeschliffen und poliert werden.

Mit Ausnahme der vorab erläuterten Bauteile stimmt das zweite Ausführungsbeispiel prinzipiell mit dem ersten Ausführungsbeispiel überein.

Drittes Ausführungsbeispiel

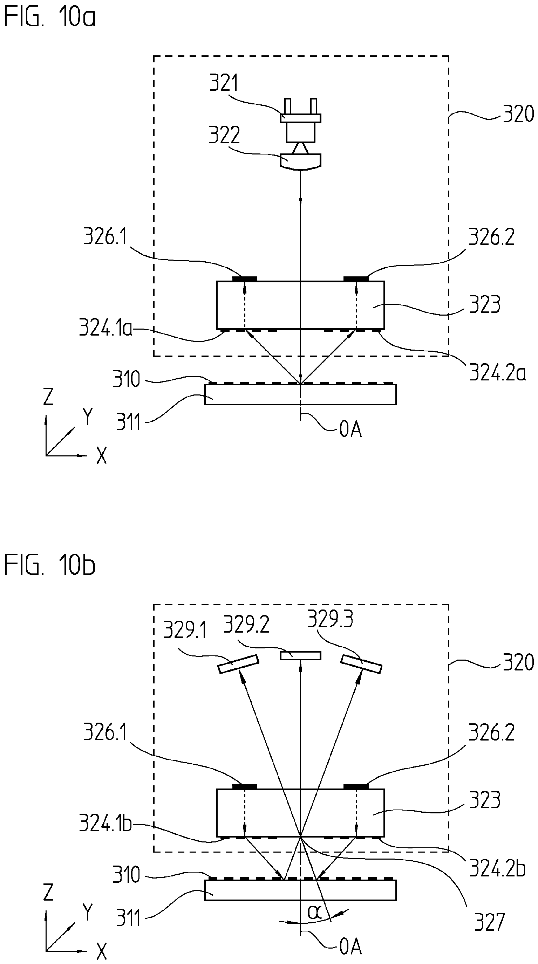

Der grundsätzliche Aufbau eines dritten Ausführungsbeispiels der erfindungsgemäßen optischen Positionsmesseinrichtung ist in den Figuren 9, 10a und 10b veranschaulicht. Diese Darstellungen entsprechen hierbei wiederum den Abtaststrahlengang-Darstellungen des ersten und zweiten Ausführungsbeispiels. Nachfolgend werden lediglich die maßgeblichen Unterschiede zu den bisherigen Ausführungsbeispielen erläutert.

Das von einer als Laserdiode ausgebildeten Lichtquelle 321 emittierte Strahlenbündel wird durch eine Kollimatoroptik 322 kollimiert und gelangt auf die Teilscheibe 311. Auf der Teilscheibe 311 ist die wiederum als Radialteilung ausgebildete Maßverkörperung 310 angeordnet. Die in +/-1. Beugungsordnung abgelenkten Teilstrahlenbündel treffen dann auf erste Abtastgitter 324.1a bzw. 324.2a, d.h. auf diffraktive optische Elemente.

Die Abtastgitter 324.1a, 324.2a kombinieren in diesem Ausführungsbeispiel verschiedene optische Funktionen, d.h. sie sind wiederum als diffraktive optische Kombinationselemente ausgebildet. Zum einen beinhalten sie jeweils eine Wellenfrontkorrektor- und Ablenk-Funktionalität entsprechend dem ersten Ausführungsbeispiel. So werden darüber die einfallenden Teilstrahlenbündel parallel zur optischen Achse OA gelenkt und die Wellenfronten der Teilstrahlenbündel so korrigiert, dass sie zunächst eben sind. Zusätzlich beinhalten die Abtastgitter 324.1a, 324.2a eine optische Linsen-Funktionalität, worüber die Teilstrahlenbündel auf die Reflektorspiegel 326.1, 326.2 fokussiert werden. Die Lage ($X_{P1}$, $Y_{P1}$), ($X_{P1}$, $Y_{P1}$) der jeweiligen Linsenfoki ergibt sich hierbei gemäß den nachfolgenden Beziehungen 3.1 - 3.3:

$$X_{P1} = -X_L \qquad\qquad (Gl. 3.1)$$

$$X_{P2} = +X_L \qquad\qquad (Gl. 3.2)$$

$$Y_{P1} = Y_{P2} = R_A \qquad\qquad (Gl. 3.3)$$

Die Abtastgitter 324.1a, 324.2a vereinigen demnach die optischen Funktionen der Wellenfrontkorrektoren mit der optischen Funktionalität des Linsenelements des Strahlrichtungsinverters aus dem vorhergehenden Ausführungsbeispiel.

Zur Implementierung verschiedener optischer Funktionalitäten in einem einzigen diffraktiven optischen Element bzw. Abtastgitter werden die verschiedenen Phasenverschiebungen, die jedes optische Element bzw. optische Funktion einbringen soll, aufaddiert und diese Phasenverschiebungen der Phasenfunktion des entsprechenden diffraktiven optischen Elements gleichgesetzt. Diese Phasenfunktion gibt dann entweder direkt die Struktur eines geblazten diffraktiven optischen Elements mit den typischen sägezahnförmigen Profilen an oder sie wird quantisiert, um z.B. binäre oder vierstufige diffraktiven optischen Elemente zu beschreiben. Besonders kostengünstig sind dabei wiederum binäre Phasengitterstrukturen mit einer Phasentiefe von 180°.

Durch die Abtastgitter 324.1a bzw. 324.2a werden die Teilstrahlenbündel auf die Reflektorspiegel 326.1 bzw. 326.2 fokussiert und gelangen nach der Reflexion auf weitere Abtastgitter 324.1b und 324.2b. Diese Abtastgitter 324.1b und 324.2b beinhalten ebenfalls wieder mehrere optische Funktionen. Über eine darin ausgebildete optische Linsen-Funktionalität werden die Teilstrahlenbündel zunächst wieder kollimiert und dann über die optische Funktionalität eines Wellenfrontkorrektors und einer Ablenkungsfunktion so vorverzerrt, dass die Teilstrahlenbündel nach der erneuten Beugung an der Maßverkörperung 310 kollimiert, aber in einem Strahlwinkel $\alpha$ zur optischen Achse OA weiterpropagieren. Der resultierende Strahlwinkel $\alpha$ ist hierbei so bestimmt, dass sich beide Teilstrahlenbündel an einem Vereinigungsgitter 327 an der Unterseite der Abtastplatte 323 vollständig überlappen. Das Vereinigungsgitter 327 mischt in bekannter Weise beide Teilstrahlenbündel und erzeugt in den resultierenden 0. und +/-1. Beugungsordnungen phasenverschobene Teilstrahlenbündel, die von den Detektorelementen 329.1 - 329.3 der Detektoreinheit detektiert werden. Polarisationsoptische Bauteile sind in diesem Ausführungsbeispiel zur Erzeugung der phasenverschobenen Positionssignale nicht erforderlich. Die Detektoreinheit umfasst daher in diesem Ausführungsbeispiel lediglich die Detektorelemente 329.1 - 329.3. Eine Phasenverschiebung der Teilstrahlenbündel von vorzugsweise 120° lässt sich durch eine geeignete Wahl der Phasentiefe und Stegbreite des Vereinigungsgitters 327 erreichen, wie dies z.B. in der EP 0 163 362 B1 offenbart ist. Die Gitterkonstante des Vereinigungsgitters 327 ist so bemessen, dass die darauf einfallenden Teilstrahlenbündel durch Beugung in jeweils erster Beugungsordnung parallel zur optischen Achse OA gelenkt werden.

Der Strahlrichtungsinverter dieses Ausführungsbeispiels besteht somit aus der optischen Linsenfunktionalität der Abtastgitter 324.1a, 324.2a und dem Reflektorspiegel 326.1, 326.2. Im Strahlverlauf werden in Strahlausbreitungsrichtung jeweils die optische Linse bzw. die Abtastgitter 324.1a, 324.2a, der Reflektorspiegel 326.1, 326.2 und dann wiederum die optische Linse bzw. die Abtastgitter 324.1a, 324.2a durchlaufen.

Abgewandelte Variante des dritten Ausführungsbeispiels

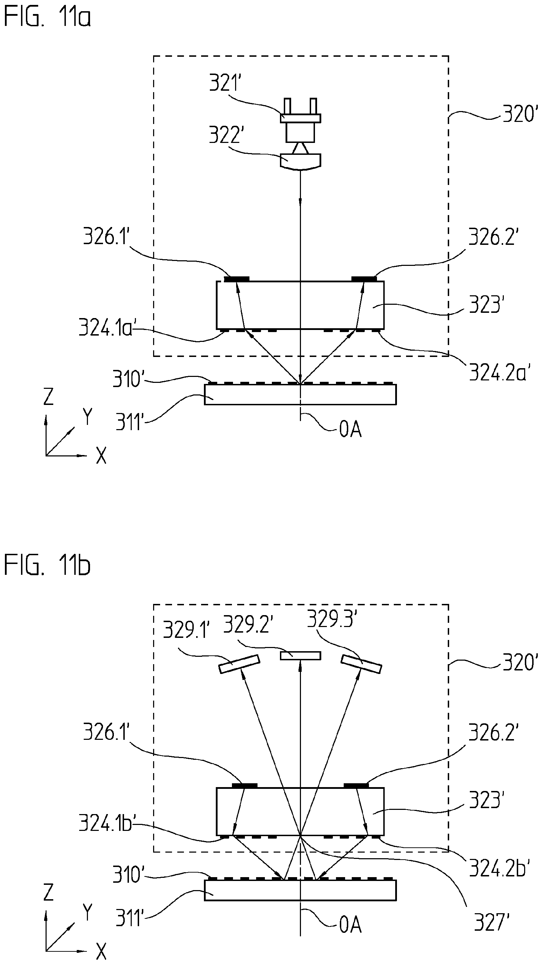

Verzichtet man im vorab erläuterten dritten Ausführungsbeispiel auf die Bedingung, dass die Teilstrahlenbündel innerhalb der Abtastplatte 323 parallel zur optischen Achse OA propagieren, so ergibt sich eine abgewandelte Variante des dritten Ausführungsbeispiels, die in den Figuren 11a und 11b dargestellt ist.

Hier enthalten die Abtastgitter 324.1a', 324.2a' sowie 324.1b', 324.2b' die vorher erläuterten optischen Funktionalitäten. Jedoch ist die mittlere optische Ablenk-Funktionalität in Messrichtung x der Abtastgitter 324.1a', 324.2a' geringer und die der Abtastgitter 3241b', 324.2b' größer gewählt, so dass sich die Teilstrahlenbündel am Vereinigungsgitter 327' aber wiederum überlappen. Bei dieser Variante der erfindungsgemäßen optischen Positionsmesseinrichtung verlaufen die Teilstrahlenbündel wie ersichtlich innerhalb der Abtastplatte 323' schräg zur optischen Achse OA.

Der Versatz in y-Richtung zwischen dem Strahlenverlauf von der Lichtquelle 321' bis zur ersten Beugung an der Maßverkörperung 310' und dem Strahlenverlauf nach der zweiten Beugung an der Maßverkörperung 310' wird durch die Wahl der y-Lage der Linsensfoki der optischen Linsenfunktionalität der Abtastgitter 324.1a', 324.2a' sowie 324.1b', 324.2b' bestimmt. Dieser Versatz der Strahlenverläufe wird mindestens so groß gewählt, dass der Strahlenverlauf von der Lichtquelle 321' bis zur ersten Beugung an der Maßverkörperung 310' nicht mit dem Strahlenverlauf nach der zweiten Beugung an der Maßverkörperung 310' überlappt. Der Versatz kann aber auch so groß gewählt werden, dass auf der Maßverkörperung 310' eine - nicht dargestellte - zusätzliche Teilungsspur am Radius $R_A$ eingefügt wird. Eine solche Teilungsspur könnte zur Erzeugung eines Referenzimpulssignals genutzt werden, wies es z.B. in der EP 1 923 673 A2 der Anmelderin offenbart ist.

Die Berechnung der Phasenfunktion der Abtastgitter 324.1b' bzw. 324.2b' erfolgt analog zum ersten Ausführungsbeispiel. Durch Rückwärtspropagation des kollimierten Strahlbündels von den Detektorelementen 329.1' - 329.3' der Detektoreinheit bis zur diffraktiven Abtastgitter 324.1b' bzw. 324.2b' wird eine erste Wellenfrontdeformation bzw. Phasenverschiebung berechnet. Durch Vorwärtspropagation vom Fokus auf den Reflektorspiegeln 326.1' bzw. 326.2' wird eine zweite Phasenverschiebung berechnet. Die Differenz beider Phasenverschiebungen entspricht dann genau derjenigen Phase, die das entsprechende diffraktive optische Element einbringen soll und stellt damit die Phasenfunktion dieses diffraktiven optischen Elements dar.

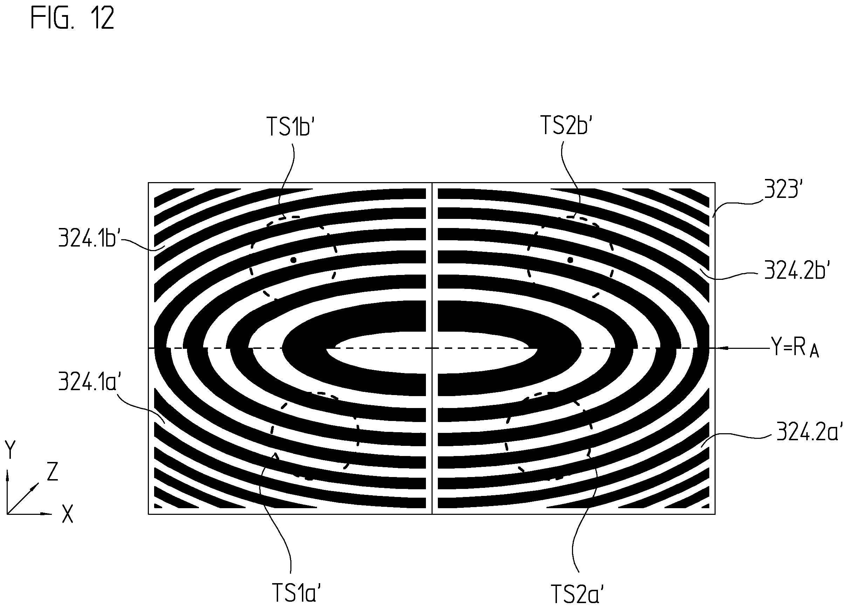

In Figur 12 ist eine stark vergröberte Struktur der Abtastgitter 324.1a', 324.1b' und den dazu spiegelsymmetrischen Abtastgittern 324.2a' und 324.2b' dieser Variante der erfindungsgemäßen optischen Positionsmesseinrichtung dargestellt.

Über die Kombination der verschiedenen optischen Funktionalitäten in diffraktiven Abtaststrukturen bzw. Abtastgitter lässt sich diese Ausführungsform der erfindungsgemäßen optischen Positionsmesseinrichtung sehr kompakt und kostengünstig ausbilden. Da außerdem die Reflektorspiegel 326.1', 326.2' monolithisch auf der Abtastplatte 323' aufgebracht sind, ergibt sich ein einfacher, robuster, schwingungs- und temperaturunempfindlicher Aufbau der Abtasteinheit 320'.

Zur weiteren Reduzierung der toleranzbedingten Wellenfrontdeformationen hat sich als vorteilhaft erwiesen, die Brennweiten der Linsen, die in den ersten und der zweiten Abtastgittern 324.1a', 324.2a', 324.1b' und 324.2b' integriert ausgebildet sind, nicht identisch sondern etwas unterschiedlich zu wählen. Wenn f1 die im Abtastplatten-Medium gemessene Brennweite der ersten Linse und f2 die entsprechende Brennweite der zweiten Linse bezeichnet, so soll weiterhin die Kombination aus beiden Linsen ein kollimiertes Teilstrahlenbündel wieder in ein kollimiertes Teilstrahlenbündel überführen, d.h. es soll gelten:

$$f1 + f2 = 2 \cdot D_A \qquad (Gl. 4)$$

mit:

f1 := Brennweite der ersten Linse
f2 := Brennweite der zweiten Linse
r1 =: Abtastradius der ersten Abtaststelle auf der Maßverkörperung
r2 =: Abtastradius der zweiten Abtaststelle auf der Maßverkörperung
$D_A$ := Dicke der Abtastplatte

Besonders günstig ist es, wenn ein Verhältnis der Brennweiten f1/f2 entsprechend dem zugehörigen Verhältnis der Abtastradien r1 bzw. r2 der ersten bzw. zweiten Abtaststelle auf der Maßverkörperung 310 gemäß der nachfolgenden Beziehung 5 gewählt wird:

$$f1 / f2 = r1 / r2 \qquad (Gl. 5)$$

Über diese Bedingung wird ein sog. Kepler-Teleskop charakterisiert, welches ein negatives Abbildungsverhältnis aufweist und das die erste, äußere Abtaststelle verkleinert auf die zweite, innere abbildet (oder alternativ die innere Abtaststelle vergrößert auf die äußere Abtaststelle). Bei einer kleinen radialen oder tangentialen Verschiebung der Teilscheibe 311 entstehen lokale Wellenfrontverkippungen, die mit größerem Radius abnehmen. Diese Abhängigkeit wird durch die obige Bedingung gemäß Gl. 5 kompensiert, indem Strahlrichtungsänderungen vor der langbrennweitigen Linse der äußeren Abtaststelle in größere Strahlrichtungsänderungen nach der kurzbrennweitigen Linse für die nachfolgende innere Abtaststelle übersetzt werden. Diese Optimierung kann noch weiter verfeinert werden, indem innerhalb jeder Abtaststelle lokale Linsenbrennweiten f1(x,y) bzw. f2(x',y') bestimmt werden, die die Gl. 4 für jede erste Abtaststelle (x,y) und der zugeordneten zweiten Abtaststelle (x',y') erfüllen, und darüber hinaus die lokalen Strahlrichtungsänderungen für die radiale und tangentiale Richtung jeweils in einer solchen Weise von der ersten auf die zweite Abtaststelle überträgt, dass sie optimal die oben erwähnte radialen Abhängigkeit der Wellenfrontverkippungen kompensiert. Dadurch werden nochmals vergrößerte Anbautoleranzen erreicht.

Viertes Ausführungsbeispiel

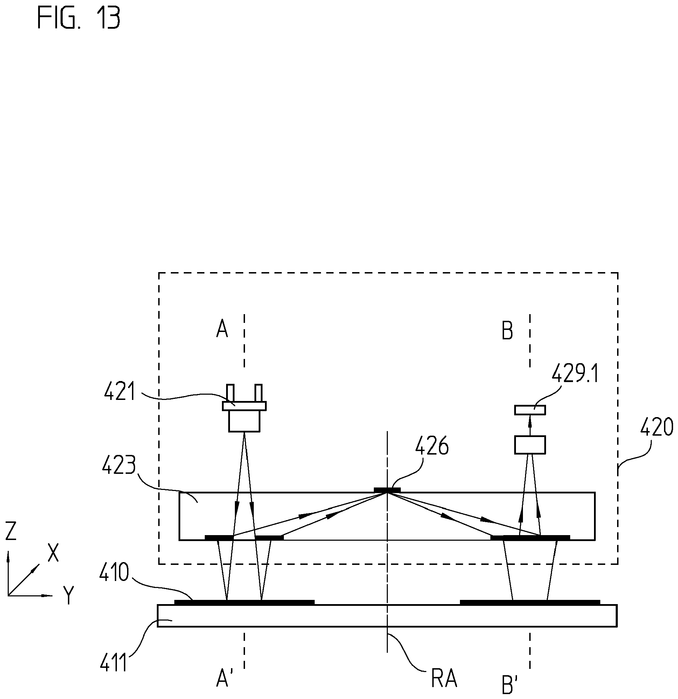

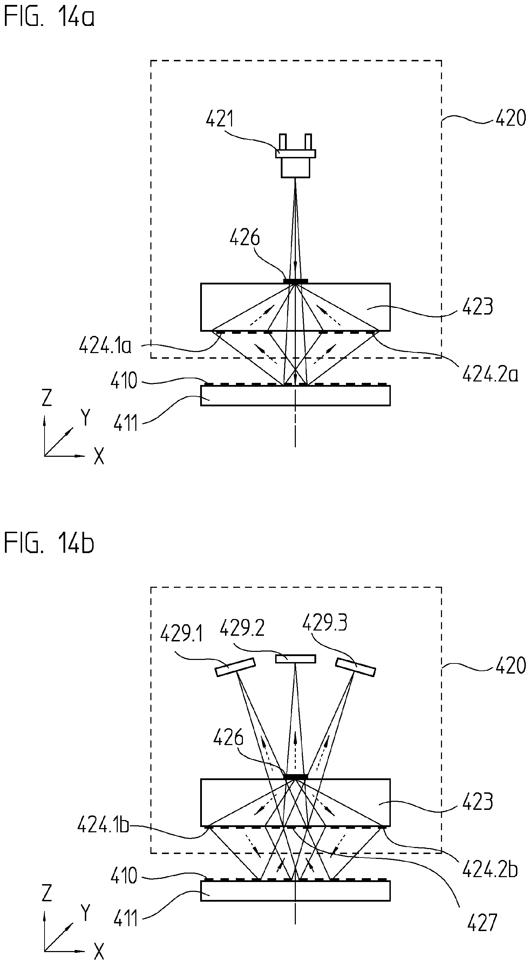

Der grundsätzliche Aufbau eines vierten Ausführungsbeispiels der erfindungsgemäßen optischen Positionsmesseinrichtung ist in den Figuren 13 sowie 14a und 14b veranschaulicht. Die Darstellungen entsprechen den Abtaststrahlengangdarstellungen der vorhergehenden Ausführungsbeispiele. Im Anschluss werden wiederum lediglich die maßgeblichen Unterschiede zu den bisherigen Ausführungsbeispielen erläutert.

Im vierten Ausführungsbeispiel der erfindungsgemäßen optischen Positionsmesseinrichtung beleuchtet nunmehr eine divergente Lichtquelle die Maßverkörperung 410 auf der Teilscheibe 411. Vorzugsweise wird hier als Lichtquelle eine sog. VCSEL-Lichtquelle (Vertical Cavity Surface Emitting Laser) verwendet. Eine Kollimatoroptik ist demzufolge nicht vorgesehen.

Das divergente Strahlenbündel wird an der Maßverkörperung 410 in +/- 1. Beugungsordnungen gebeugt bzw. aufgespalten. Die ersten Abtastgitter 424.1a, 424.2a kombinieren hierbei wieder mehrere optische Funktionalitäten. So wird darüber die optische Funktionalität einer Linse zur Kollimation der divergenten Teilstrahlenbündel ausgebildet, die optische Funktionalität einer Wellenfrontkorrektur für die Wellenfrontdeformationen durch die als Radialteilung ausgebildete Maßverkörperung 410 auf der Teilscheibe 411 sowie die optische Funktionalität einer Fokussierlinse, die die Teilstrahlenbündel auf das Zentrum der Oberseite der Abtastplatte 424 fokussiert. Nach der Reflexion der Teilstrahlenbündel am Reflektorspiegel 426 gelangen die Teilstrahlenbündel auf zweite Abtastgitter 424.1b, 424.2b, die ebenfalls mehrere optische Funktionalitäten aufweisen. So kollimieren die zweiten Abtastgitter 424.1b, 424.2b die divergenten Teilstrahlenbündel, unterziehen sie einer Wellenfrontkorrektur für die nachfolgende Beugung an der Maßverkörperung 410 bzw. Radialteilung und fokussieren die Teilstrahlenbündel auf die Detektorelemente 429.1 - 429.3 der Detektoreinheit. Schließlich bringt ein Vereinigungsgitter 427 die beiden Teilstrahlenbündel zur Interferenz.

Die Besonderheit dieses Ausführungsbeispiels liegt in der diametralen Abtastung der Maßverkörperung 410 auf der Teilscheibe 411. Dadurch werden eventuelle Messfehler bei einer Verschiebung der Teilscheibe 411 in der x-y-Ebene verhindert. Auch in dieser Ausführungsform ist der ideale Strahlrichtungsinverter ein Retroreflektor, der wie im dritten Ausführungsbeispiel aus der optischen Linsenfunktionalität der Abtastgitter 424.1a, 424.2a, 424.1b, 424.2b und dem Reflektorspiegel 426 besteht. Im Strahlenverlauf werden wiederum die optische Linse bzw. die Abtastgitter 424.1a, 424.2a, der Reflektorspiegel 426 und dann wieder die Linse bzw. die Abtastgitter 424.1b, 424.2b durchlaufen.

Gemäß den vorher erläuterten Ausführungsbeispielen, in denen die erfindungsgemäße optische Positionsmesseinrichtung jeweils eine abgetastete Radialteilung als Maßverkörperung umfasst, gibt es eine Reihe unterschiedlicher Realisierungsmöglichkeiten für die Reflektoreinheit in der Abtasteinheit. Über alle verschiedenen Realisierungsmöglichkeiten sind jedoch die nachfolgenden optischen Funktionalitäten der Reflektoreinheit gewährleistet:

- Eine kleine radiale (tangentiale) Strahlrichtungsänderung des einfallenden Teilstrahlenbündels wird in eine im Wesentlichen entgegengesetzte radiale (tangentiale) Strahlrichtungsänderung des ausfallenden Teilstrahlenbündels übersetzt.

- Eine kleine radiale (tangentiale) Strahlpositionsänderung des einfallenden Teilstrahlenbündels wird in eine im Wesentlichen entgegengesetzte Strahlpositionsänderung des ausfallenden Teilstrahlenbündels übersetzt.

- Die Wellenfrontdeformation, die durch die erste Beugung an der Radialteilung entsteht, wird in eine Wellenfrontdeformation übersetzt, die die Wellenfrontdeformation durch die zweite Beugung an der Radialteilung kompensiert.

Fünftes Ausführungsbeispiel

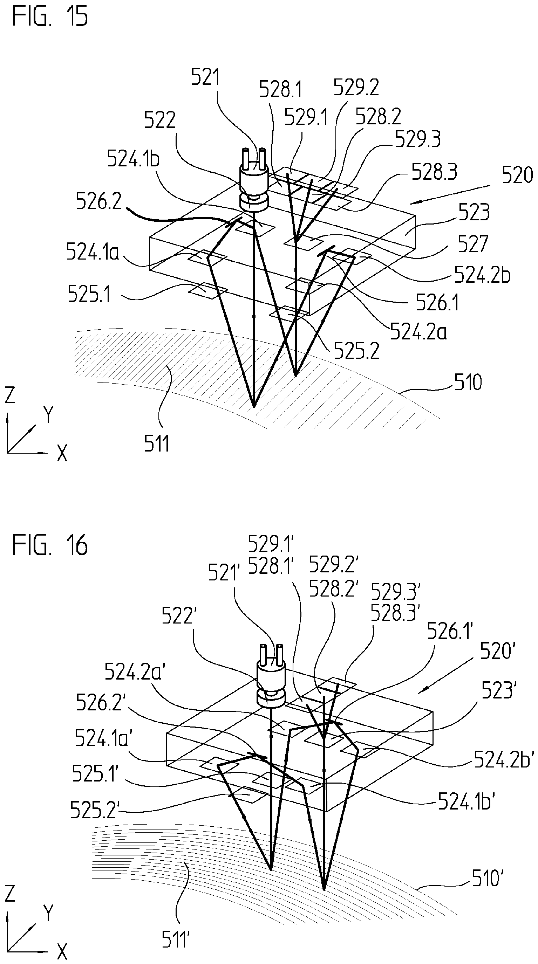

Im Gefolge werden nunmehr verschiedene Varianten eines fünften Ausführungsbeispiels der erfindungsgemäßen optischen Positionsmesseinrichtung beschrieben. Diese unterscheiden sich von den bislang erläuterten Beispielen i.w. dadurch, dass die abgetastete Maßverkörperung als Trommelteilung auf dem Außenumfang einer rotierenden Teilungstrommel ausgebildet ist. Die Rotationsachse fällt hierbei mit der Längsachse der Teilungstrommel zusammen.
Der Aufbau einer ersten und einer zweiten Variante des fünften Ausführungsbeispiels ist in den Figuren 15 und 16 schematisch dargestellt. Diese beiden Varianten unterscheiden sich dadurch, dass die Messrichtung der Abtastung bei der Variante gemäß Figur 15 in tangentialer Richtung x orientiert ist und bei der Variante gemäß Figur 16 in axialer Richtung y. Dies bedeutet, dass über die erfindungsgemäße optische Positionsmesseinrichtung gemäß Figur 15 der Azimutwinkel der rotierenden Teilungstrommel 510 bestimmbar ist, über die Variante gemäß Figur 16 hingegen die axiale Verschiebung der Teilungstrommel 510'.
Prinzipiell entspricht die Abtastung in diesen beiden Varianten des fünften Ausführungsbeispiels der erläuterten Abtastung in den vorhergehenden Ausführungsbeispielen, insbesondere in Bezug auf die Ausbildung einer Reflektoreinheit mit ersten und zweiten Wellenfrontkorrektoren sowie einem Strahlrichtungsinverter. Es sei im Folgenden deshalb nur kurz auf einige erwähnenswerte Aspekte dieser Varianten eingegangen.
Das durch eine Kollimatoroptik 522, 522' kollimierte Strahlenbündel gelangt auf die Teilungstrommel 510, 510', auf deren Außenumfang die Maßverkörperung 511, 511' in Form einer Trommelteilung angeordnet ist. Die Maßverkörperung 511 in Figur 15 besitzt hierbei Teilungsgitterlinien in axialer Richtung, bei der Maßverkörperung 511' in Figur 16 sind die Teilungsgitterlinien in tangentialer Richtung orientiert angeordnet. Die in +/-1. Beugungsordnung abgelenkten bzw. aufgespalten Teilstrahlenbündel erfahren durch die Reflexion an der gekrümmten Trommelteilung eine Deformation ihrer jeweiligen Wellenfronten.
Im Fall der Variante gemäß Figur 16 trifft das auf die Maßverkörperung 511' einfallende kollimierte Strahlenbündel die Teilungstrommel 510' ferner nicht an ihrem Scheitel. Die von der Maßverkörperung 511' reflektierten Beugungsordnungen bzw. Teilstrahlenbündel erfahren hier zusätzlich eine Neigung in x-Richtung senkrecht zur Messrichtung.
Die diffraktiven optischen Elemente bzw. Abtastgitter 524.1a, 524.2a bzw. 524.1a', 524.2a' kompensieren durch ihre entsprechend gewählte Phasenfunktion diese Wellenfrontdeformationen sowie im Fall der Figur 16 die resultierende Strahlneigung und fokussieren die Teilstrahlenbündel auf die Reflektorspiegel 526.1, 526.2 bzw. 526.1', 526.2'. Von dort gelangen divergente Teilstrahlenbündel auf die ebenfalls als diffraktive optische Elemente ausgebildeten Abtastgitter 524.1b, 524.2b bzw. 524.1b', 524.2b'. Deren Phasenfunktion ist hierbei bis auf das jeweilige Vorzeichen identisch mit der Phasenfunktion der ersten Abtastgitter 524.1a, 524.2a bzw. 524.1a', 524.2a'. Nach der erneuten Reflexion an der Maßverkörperung 511 bzw. 511' besitzen die beiden Teilstrahlenbündel wieder ebene Wellenfronten und interferieren anschließend miteinander. Die Abtastgitter 524.1a, 524.2a bzw. 524.1a', 524.2a' kombinieren wiederum die optischen Funktionalitäten eines Wellenfrontkorrektors, einer Linse und einer Strahlablenkung.
Die in den Abtastgittern 524.1a, 524.2a bzw. 524.1a', 524.2a' ausgebildete Linsenfunktion kann wie im zweiten, dritten und vierten Ausführungsbeispiel als sphärische Linsenfunktion ausgebildet werden. Allerdings treten bei einer Abtastung der Teilungstrommel 510, 510' gemäß den Figuren 15 und 16 die Wellenfrontverzerrungen im wesentlichen nur in tangentialer Richtung auf. In axialer Richtung ist die Teilungstrommel 510, 510' geradlinig und die Ablenkwirkung der Maßverkörperung 511, 511' bzw. der Trommelteilung konstant. Dies legt den Schluss nahe, dass eine Retroreflexion in axialer Richtung nicht unbedingt nötig ist. Allerdings ist hier zu berücksichtigen, dass eine Retroreflexion senkrecht zur Messrichtung in jedem Fall benötigt wird, um die bekannte Kippempfindlichkeit der Abtastoptik um die optische Achse OA zu reduzieren ("Moirè-Kippung"). In diesem Zusammenhang sei ausdrücklich auf die DE 10 2005 029 917 A1 der Anmelderin verwiesen. Daraus folgt, dass auf eine vollständige Retroreflexion nur bei einer Abtastung einer Teilungstrommel 510' in der Variante der Figur 16 mit einer axialen Messrichtung verzichtet werden kann. In allen anderen Fällen, einschließlich der Abtastung von Radialteilungen, ist ein Strahlrichtungsinverter mit einer vollständigen Retroreflexion erforderlich. Die vollständige Retroreflexion lässt sich, wie oben beschrieben, über ein Tripelprisma, einen Tripelspiegel, eine Kombination aus sphärischer Linse und Reflektorspiegel sowie durch eine Kombination aus einem Dachkantprisma und einer Zylinderlinse mit Linsenwirkung parallel zur Dachkante realisieren. Für die nicht-vollständige, einachsige Retroreflexion hingegen benötigt man entweder ein Dachkantprisma oder ein Kombination aus Zylinderlinse und Reflektorspiegel. Die Ausrichtung der einachsigen Retroreflexion in der Variante gemäß Figur 16 muss so erfolgen, dass die Dachkante des Dachkantprismas in axialer Richtung orientiert ist bzw. die Zylinderlinse in tangentialer Richtung fokussiert.

Wie im oben erläuterten ersten Ausführungsbeispiel erfolgt in den beiden Varianten gemäß den Figuren 15 und 16 die Erzeugung der phasenverschobener Positionssignale polarisationsoptisch. Ebenso können jedoch auch hier - analog zum dritten Ausführungsbeispiel - die phasenverschobenen Positionssignale diffraktiv über einen Abtaststrahlengang mit einem geeignet ausgebildeten Vereinigungsgitter gewonnen werden.

Ggf. kann die jeweilige Messaufgabe erfordern, sowohl die axiale Verschiebung als auch den Azimutwinkel der Teilungstrommel 510 bzw. 510' zu erfassen. In diesem Fall ist es möglich, die Maßverkörperungen 511 und 511' zusammenzuführen und als Kreuzgitterteilung auf dem Außenumfang einer Teilungstrommel auszubilden. Dadurch reduziert sich sowohl der erforderliche Bauraum für die erfindungsgemäße optische Positionsmesseinrichtung als auch das Trägheitsmoment der Teilungstrommel. Weiterhin kann in diesem Fall durch den Einsatz von dann insgesamt sechs Abtasteinheiten die vollständige sechsdimensionale Lage der Teilungstrommel bestimmt werden.

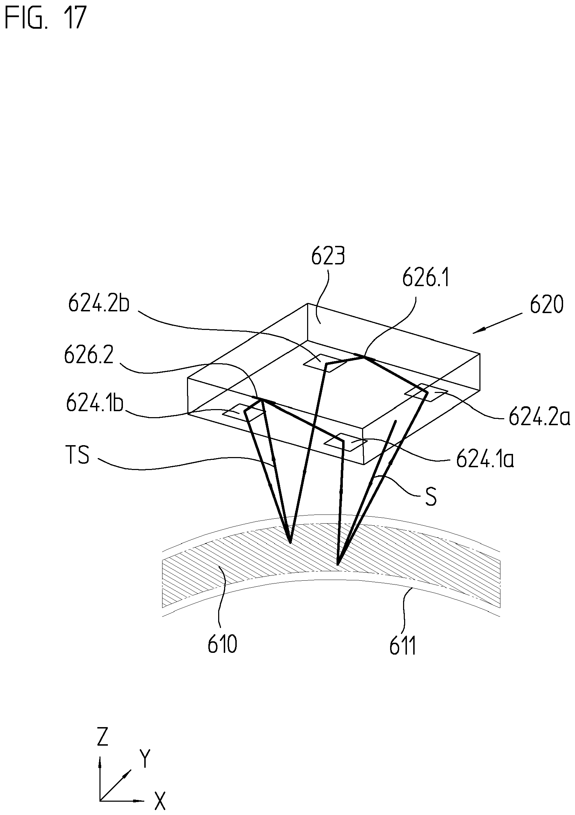

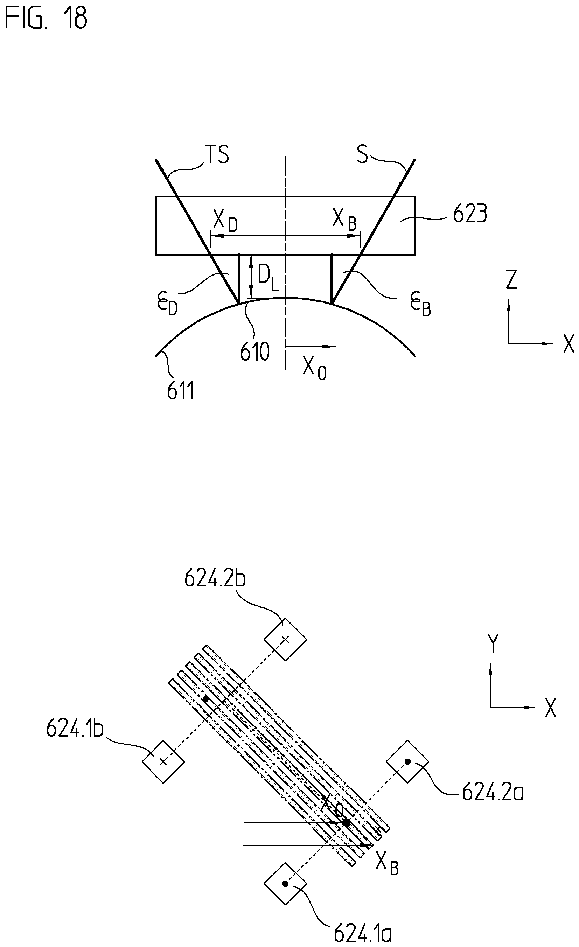

Eine dritte Variante der fünften Ausführungsform der erfindungsgemäßen optischen Positionsmesseinrichtung ist teilweise in Figur 17 dargestellt; Figur 18 dient zur nachfolgenden Erläuterung bestimmter geometrischer Dimensionierungsregeln dieser Variante. Diese Variante der erfindungsgemäßen optischen Positionsmesseinrichtung kann wie die vorab erläuterte zweite Variante mit einer - nicht dargestellten - Kreuzgitterteilung dazu verwendet werden, sowohl die axiale Verschiebung als auch den Azimutwinkel der Teilungstrommel 610 bzw. 510' zu erfassen bzw. über sechs Abtasteinheiten 620 die sechsdimensionale Lage der Teilungstrommel 611 zu bestimmen. Hierzu wird eine Abtastung eingesetzt, deren Messrichtung um die Normale auf die Oberfläche des Trommelaußenumfangs verdreht ist. Dies wird durch eine Ausrichtung der Teilungsstriche der Maßverkörperung 610 dergestalt erreicht, dass diese ebenfalls um die erwähnte Oberflächennormale verdreht angeordnet ist. Eine symmetrische Verdrehung der beiden Messrichtungen einer Kreuzgitterteilung um etwa +/- 45° hat dabei den Vorteil, dass nicht zweierlei unterschiedliche Abtasteinheiten mit unterschiedlichen diffraktiven optischen Elementen in der in der Abtastplatte gefertigt werden müssen. Vielmehr können dann identische, aber gegeneinander um die erwähnte Normalenrichtung verdrehte Abtasteinheiten verwendet werden.

Bei einer derartigen Ausbildung der Maßverkörperung würden aufgrund des seitlichen Versatzes der Auftreffpunkte der abtastenden Teilstrahlenbündel bei senkrechter Beleuchtung bezüglich der Abtastplatte die beiden von der Maßverkörperung zurückreflektierten Teilstrahlenbündel erster Ordnung asymmetrisch auf die Abtastplatte auftreffen. Daraus würde folgen, dass die beiden ersten durchlaufenen Abtastgitter 624.1a, 624.2a, die u.a. die Verzerrung der Wellenfronten korrigieren sollen, ebenfalls nach Spiegelung nicht identisch wären. Daraus folgt eine stark unterschiedliche Deformation der Wellenfronten der beiden miteinander interferierenden Teilstrahlenbündel bei nicht idealem Anbau oder bei Abweichung der Wellenlänge der Lichtquelle von der beim Design vorausgesetzten Wellenlänge. Dies würde somit zu einer raschen Abnahme des Modulationsgrades und damit der Signalgröße der erzeugten Positionssignale führen.

Diese Asymmetrie der ersten diffraktiven optischen Elemente 624.1a und 624.2a und die damit verbundene reduzierte Anbautoleranz kann durch einen schrägen Einfall des beleuchtenden Strahles S und durch einen ebenfalls schrägen Ausfall der beiden miteinander interferierenden Teilstrahlenbündel TS behoben werden, wie dies in den Figur 17 und im oberen Teil der Figur 18 veranschaulicht ist.

Annähernd wird dies erreicht, indem der Durchtrittspunkt durch die Abtastplatte 623 und der Einfallswinkel $\varepsilon_B$ des beleuchtenden Strahles S so gewählt werden, dass die 0. Ordnung des von der Maßverkörperung 610 bzw. der Trommelteilung zurückreflektierten Teilstrahlenbündels senkrecht und mittig zwischen den beiden ersten Abtastgittern 624.1a und 624.2a auftrifft, wie dies in Figur 18 angedeutet ist.

Daher wird der Einfallswinkel $\varepsilon_B$ des beleuchtenden Strahls S vorzugsweise folgendermaßen gewählt:

$$\varepsilon_B = \arctan\left(\frac{2x_0\sqrt{R^2 - x_0^2}}{R^2 - 2x_0^2}\right) \qquad \text{(Gl. 6)}$$

mit:

$x_0$ := Abtastort bei erster Beugung an der Maßverkörperung in x-Richtung
R := Radius der Teilungstrommel

Für große Trommelradien R gilt näherungsweise:

$$\varepsilon_B = \frac{2x_0}{R} \qquad \text{(Gl. 6.1)}$$

Die x-Koordinate für den Durchstoßpunkt des beleuchtenden Strahls S durch die Unterseite der Abtastplatte 623 ergibt sich zu:

$$x_B = \frac{x_0 R^2 - 2x_0 (D_L + R)\sqrt{R^2 - x_0^2}}{2x_0^2 - R^2} \qquad \text{(Gl. 7)}$$

mit:
$D_L$ := Abtastabstand zwischen Scheitel der Teilungstrommel und Abtastplatte
Für große Trommelradien R gilt näherungsweise:

$$x_B = x_0 \left( 2\frac{D_L + R}{R} - 1 \right) \qquad \text{(Gl. 7.1)}$$

Die y-Koordinate des Durchstoßpunkts des beleuchtenden Strahls S durch die Unterseite der Abtastplatte 623 entspricht dem Mittelwert der y-Koordinaten der ersten Abtastgitter 624.1a und 624.2a gemäß:

$$y_B = \frac{y_{624.1a} + y_{624.2a}}{2} \qquad \text{(Gl. 8)}$$

Die entsprechenden geometrischen Größen (Ausfallswinkel; Durchstoß-Koordinaten) für die ausfallenden interferierenden Strahlenbündel TS ergeben sich gemäß:

$$x_D = -x_B \qquad \text{(Gl. 9.1)}$$

$$y_D = \frac{y_{624.1b} + y_{624.2b}}{2} \qquad \text{(Gl. 9.2)}$$

$$\varepsilon_D = \varepsilon_B \qquad \text{(Gl. 9.3)}$$

Die Verwendung einer schrägen Beleuchtung ist für alle Abtastungen, bei denen die Messrichtung nicht in tangentialer oder axialer Richtung verläuft hilfreich. So können dann symmetrisch ausgebildete Abtastgitter 624.1a, 624.2a sowie 624.1b, 624.2b gesetzt werden; zudem stehen dann große Toleranzen bzgl. der Nennlage der Teilungstrommel zur Verfügung. Dabei ist es sinnvoll den ersten und zweiten Abtastpunkt auf der Maßverkörperung 610 bzw. auf der Teilungstrommel in x-Richtung symmetrisch um den Trommelscheitel zu wählen. Dies führt dazu, dass die Wellenfrontkorrektoren die Korrektur der wegen der Trommelkrümmung gekrümmten Wellenfront übernehmen, die Verkippung der Wellenfront wird durch die schräge Beleuchtung ausgeglichen.
Wie im ersten beschriebenen Ausführungsbeispiel mit einer Radialgitter-Abtastung erweist sich für die Trommelabtastung, dass ein Retroreflektor die ideale Lösung für den Strahlrichtungsinverter darstellt. Dies ist darauf zurückzuführen, dass bei Abweichungen der Teilungstrommel von ihrer Nennlage toleranzbedingte Wellenfrontdeformationen auftreten, die im wesentlichen Wellenfrontverkippungen und damit Strahlneigungen darstellen. Durch die Retroreflexion werden diese Strahlneigungen invertiert, so dass sie nach erneuter Beugung an der Maßverkörperung 610 wieder aufgehoben werden und zu einer optimalen Interferenz der beiden Teilstrahlenbündel führen.

Sechstes Ausführungsbeispiel

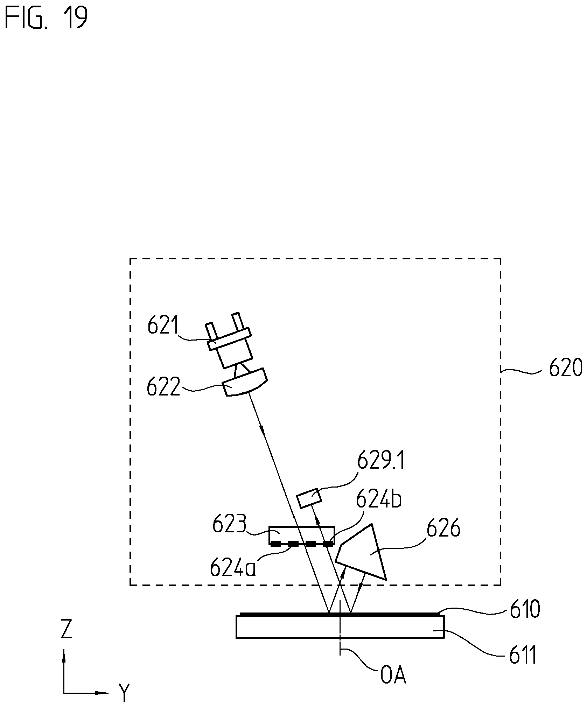

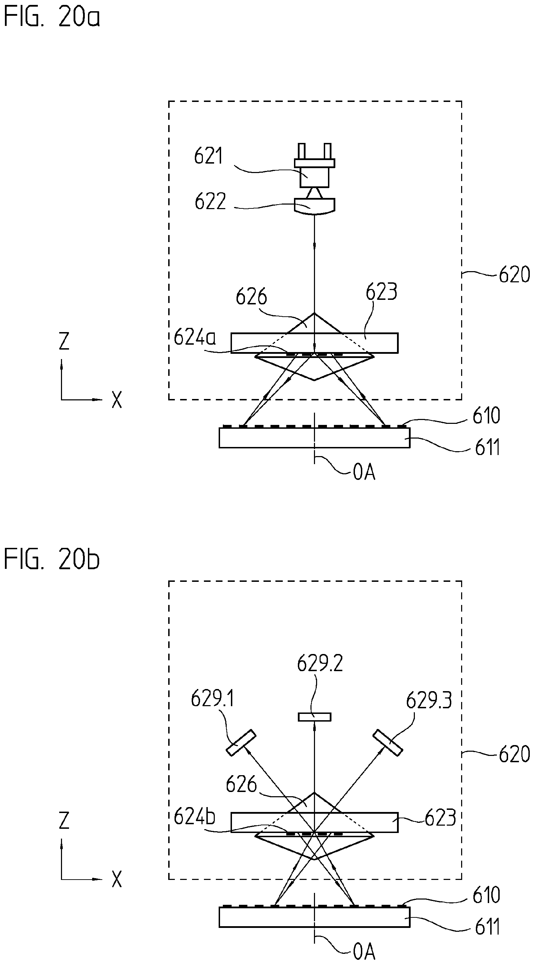

Anhand der Figuren 19, 20a und 20b wird abschließend ein sechstes Ausführungsbeispiel der erfindungsgemäßen optischen Positionsmesseinrichtung beschrieben.

In den bislang erläuterten Ausführungsbeispielen war stets vorgesehen, dass die Maßverkörperung, die beiden Wellenfrontkorrektoren und der Strahlrichtungsinverter in Strahlausbreitungsrichtung in der nachfolgenden Reihenfolge von den Strahlenbündeln bzw. Teilstrahlenbündeln durchlaufen werden:
Maßverkörperung (erste Beugung) - erster Wellenfrontkorrektor - Strahlrichtungsinverter - zweiter Wellenfrontkorrektor - Maßverkörperung (zweite Beugung)

Entsprechend dieser Reihenfolge waren die verschiedenen Elemente in der erfindungsgemäßen optischen Positionsmesseinrichtung angeordnet.

Im Rahmen der vorliegenden Erfindung ist es jedoch auch möglich, dass diese Elemente auch in der nachfolgenden Reihenfolge von den Strahlenbündeln bzw. Teilstrahlenbündeln durchlaufen werden können:
Erster Wellenfrontkorrektor - Maßverkörperung (erste Beugung) - Strahlrichtungsinverter - Maßverkörperung (zweite Beugung) - zweiter Wellenfrontkorrektor

Ganz allgemein kann man daher sagen, dass erfindungsgemäß die Reflektoreinheit in der Abtasteinheit dergestalt angeordnet und/oder ausgebildet ist, dass die Strahlenbündel zunächst eine erste Kombination aus Maßverkörperung und erstem Wellenfrontkorrektor durchlaufen, anschließend über den Strahlrichtungsinverter eine Rückreflexion von Teilstrahlenbündeln in Richtung Maßverkörperung erfolgt und die Teilstrahlenbündel dann eine zweite Kombination aus Maßverkörperung und zweitem Wellenfrontkorrektor durchlaufen, bevor die Teilstrahlenbündel anschließend auf die Detektoreinheit gelangen.

Ein Ausführungsbeispiel der optischen Positionsmesseinrichtung, in dem die Strahlenbündel die verschiedenen Elemente in der zweitgenannten Reihenfolge durchlaufen, ist in den Figuren 19, 20a und 20b dargestellt.

Das von der Lichtquelle 621 emittierte Strahlenbündel wird über die Kollimatoroptik 622 kollimiert und gelangt auf ein erstes Abtastgitter 624a, das auf einer Abtastplatte 623 angeordnet ist. Über das erste Abtastgitter 624a wird das einfallende Strahlenbündel in zwei gebeugte Teilstrahlenbündel +/- 1. Beugungsordnung aufgespalten. Die beiden Teilstrahlenbündel treffen dann auf die als Radialteilung ausgebildete Maßverkörperung 610 auf der Teilscheibe 611. Dort werden die Teilstrahlenbündel erneut in die +/- 1. Beugungsordnung gebeugt und wie aus Figur 20a ersichtlich in Messrichtung x im wesentlichen entgegengesetzt zur Einfallsrichtung zurückreflektiert. Die zurückreflektierten Teilstrahlenbündel treffen dann auf den als Tripelprisma ausgebildeten Strahlrichtungsinverter, von dem sie wieder in Richtung der Maßverkörperung 610 retroreflektiert werden. Nach der erneuten Beugung der Teilstrahlenbündel an der Maßverkörperung 610 gelangen diese auf ein zweites Abtastgitter 624b, das die beiden Teilstrahlenbündel überlagert und zur Interferenz bringt. Wie im obigen dritten Ausführungsbeispiel ist das zweite Abtastgitter derart ausgebildet, dass in den resultierenden 0. und +/-1. Beugungsordnungen vorzugsweise drei zueinander um 120° phasenversetzte Strahlenbündel austreten, welche über die Detektorelemente 629.1 - 629.3 der Detektoreinheit erfasst werden.

Das erste Abtastgitter 624a vereinigt wiederum verschiedene optische Funktionalitäten. So wirkt es als Aufspaltgitter, das das von der Lichtquelle 621 her einfallende Strahlenbündel in zwei Teilstrahlenbündel aufspaltet. Mit dieser Aufspaltung ist gleichzeitig eine symmetrische Ablenkfunktionalität für die beiden Teilstrahlenbündel verbunden. Weiterhin wirkt das erste Aufspaltgitter 624a als erster Wellenfrontkorrektor. Hierdurch werden die austretenden Wellenfronten der beiden Teilstrahlenbündel so verzerrt, dass nach der Beugung an der als Radialteilung ausgebildeten Maßverkörperung 610 jeweils kollimierte Teilstrahlenbündel vorliegen, die auf den als Tripelprisma ausgebildeten Strahlrichtungsinverter gelangen. Wiederum ist so sichergestellt, dass die Retroreflexion mit ebenen Wellenfronten der beteiligten Teilstrahlenbündel erfolgt.

Ähnlich hierzu vereinigt auch das zweite Abtastgitter 624b verschiedene optische Funktionalitäten. So wirkt das zweite Abtastgitter 624b als zweiter Wellenfrontkorrektor, der die Wellenfronten der Teilstrahlenbündel, die aufgrund der zweiten Beugung an der Maßverkörperung verzerrt werden, wieder in ebene Wellenfronten überführt. Desweiteren wirkt das zweite Abtastgitter 624b in diesem Ausführungsbeispiel auch als Vereinigungsgitter, das die beiden Teilstrahlenbündel zur Interferenz bringt und in drei austretende phasenverschobene Strahlenbündel umwandelt.

Im Gegensatz zu den bislang beschriebenen Ausführungsbeispielen der erfindungsgemäßen optischen Positionsmesseinrichtungen sind den beiden aufgespaltenen Teilstrahlenbündeln hier keine getrennten Abtastgitter zugeordnet. Deshalb ist es erforderlich, dass das erste und zweite Abtastgitter 624a, 624b in diesem Ausführungsbeispiel jeweils beide Teilstrahlenbündel in Bezug auf ihre jeweiligen Wellenfronten korrigiert. Hierzu sind die ersten und zweiten Abtastgitter 624a, 624b als diffraktive Strukturen ausgebildet.

Als besonderer Vorteil der sechsten Ausführungsform der erfindungsgemäßen optischen Positionsmesseinrichtung sei abschließend erwähnt, dass diese eine besonders kompakte Bauform aufweist.

Neben den verschiedenen, bislang im Detail erläuterten Ausführungsbeispielen der erfindungsgemäßen optischen Positionsmesseinrichtung resultieren im Rahmen der vorliegenden Erfindung selbstverständlich weitere Ausführungsmöglichkeiten. Diverse Varianten seien nachfolgend kurz angedeutet.

Falls etwa die azimutale Lage der ersten Abtaststelle bei einer abgetasteten Radialteilung nennenswert von der azimutalen Lage der zweiten Abtaststelle der Radialteilung abweicht, sind die Wellenfrontgradienten der beiden Abtaststellen bei einer Verschiebung der Teilscheibe aus der Nennlage nicht mehr gleichgerichtet. Vielmehr sind sie zueinander verdreht und in ihrer Größe verändert. Daher müssen zusätzliche, optische Mittel wie Prismen (z.B. Dove-Prisma) oder Spiegelanordnungen eingebracht werden, um sie entsprechend zu übertragen, d.h. um die optimale Bilddrehung und -skalierung zu gewährleisten.

Anstelle entweder rein refraktive oder rein diffraktive Wellenfrontkorrektoren und Linsen zu verwenden, können auch gemischte refraktive und diffraktive Elemente verwendet werden. Desweiteren können auch geeignet ausgebildete Spiegeloptiken hierzu eingesetzt werden.

Die abgetastete Maßverkörperung kann selbstverständlich ebenfalls alternativ ausgebildet werden, nämlich als Durchlicht-Maßverkörperung.

Das erfindungsgemäße Abtastkonzept kann neben der Abtastung von Radial- oder Trommelteilungen auch zur Abtastung anderer inhomogener Teilungsstrukturen verwendet werden.

Ferner ist es möglich, den Strahlrichtungsinverter nicht nur als Tripelprisma, Tripelspiegel oder Linse mit Spiegel auszubilden. Auch eine Kombination aus einem 90°-Dachkantprisma und einer Zylinderlinse kann hierzu verwendet werden, wobei die Linsenwirkung parallel zur Dachkante orientiert und die Dachkante in der Brennebene der Linse angeordnet sein muss usw..

**Patentansprüche**

**1.** Optische Positionsmesseinrichtung zur Erfassung der Relativposition einer Abtasteinheit (20; 220; 320; 420; 520; 520'; 620; 2000) und einer Maßverkörperung (10; 210; 310; 410; 510; 510'; 610; 1000), wobei die Abtasteinheit (20; 220; 320; 420; 520; 520'; 620; 2000) und die Maßverkörperung (10; 210; 310; 410; 510; 510'; 610; 1000) entlang einer gekrümmten Messrichtung (x) gegeneinander bewegbar sind und wobei

- die Abtasteinheit (20; 220; 320; 420; 520; 520'; 620; 2000) mindestens eine Reflektoreinheit (2000) und eine Detektoreinheit aufweist und die Reflektoreinheit (2000) aus einem ersten Wellenfrontkorrektor (2100), einem Strahlrichtungsinverter (2300) und einem zweiten Wellenfrontkorrektor (2200) besteht und

- die Reflektoreinheit (2000) in der Abtasteinheit (20; 220; 320; 420; 520; 520'; 620; 2000) dergestalt angeordnet und/oder ausgebildet ist, dass Strahlenbündel zunächst eine erste Kombination aus Maßverkörperung (10; 210; 310; 410; 510; 510'; 610; 1000) und erstem Wellenfrontkorrektor (2100) durchlaufen, anschließend über den Strahlrichtungsinverter (2300) eine Rückreflexion von Teilstrahlenbündeln in Richtung Maßverkörperung (10; 210; 310; 410; 510; 510'; 610) erfolgt und die Teilstrahlenbündel dann eine zweite Kombination aus Maßverkörperung (10; 210; 310; 410; 510; 510'; 610; 1000) und zweitem Wellenfrontkorrektor (2200) durchlaufen, bevor die Teilstrahlenbündel anschließend auf die Detektoreinheit treffen, wobei

- über die Reflektoreinheit (2000) sichergestellt ist, dass die Wellenfrontdeformationen der Teilstrahlenbündel, die über die erste Beugung an der Maßverkörperung (10; 210; 310; 410; 510; 510'; 610; 1000) resultieren, in Wellenfrontdeformationen umgesetzt werden, die die resultierenden Wellenfrontdeformationen der Teilstrahlenbündel bei der zweiten Beugung an der Maßverkörperung (10; 210; 310; 410; 510; 510'; 610) kompensieren, indem

- über den ersten Wellenfrontkorrektor (2100) eine Umwandlung der aus der ersten Kombination von Maßverkörperung (10; 210; 310; 410; 510; 510'; 610) und erstem Wellenfrontkorrektor (2100) austretenden Wellenfronten in kollimierte Teilstrahlenbündel mit ebenen Wellenfronten erfolgt und

- über den zweiten Wellenfrontkorrektor (2200) eine Umwandlung der aus der zweiten Kombination von Maßverkörperung (10; 210; 310; 410; 510; 510'; 610) und zweitem Wellenfrontkorrektor (2200) austretenden Wellenfronten in kollimierte Teilstrahlenbündel mit ebenen Wellenfronten erfolgt, so dass die Wellenfronten der zur Überlagerung kommenden Teilstrahlenbündel nach der zweiten Beugung an der Maßverkörperung (10; 210; 310; 410; 510; 510'; 610) am Überlagerungsort identisch sind und wobei

entweder

- die erste Kombination von Maßverkörperung (10; 210; 310; 410; 510; 510'; 610) und erstem Wellenfrontkorrektor (2100) in der Reihenfolge Maßverkörperung (10; 210; 310; 410; 510; 510'; 610) - erster Wellenfrontkorrektor (2100) in der Strahlausbreitungsrichtung angeordnet ist und

- die zweite Kombination von Maßverkörperung (10; 210; 310; 410; 510; 510'; 610) und zweitem Wellenfrontkorrektor (2200) in der Reihenfolge zweiter Wellenfrontkorrektor (2200) - Maßverkörperung (10; 210; 310; 410; 510; 510'; 610) in der Strahlausbreitungsrichtung angeordnet ist oder

- die erste Kombination von Maßverkörperung (10; 210; 310; 410; 510; 510'; 610) und erstem Wellenfrontkorrektor (2100) in der Reihenfolge erster Wellenfrontkorrektor (2100) - Maßverkörperung (10; 210; 310; 410; 510; 510'; 610) in der Strahlausbreitungsrichtung angeordnet ist und

- die zweite Kombination von Maßverkörperung (10; 210; 310; 410; 510; 510'; 610) und zweitem Wellenfrontkorrektor (2200) in der Reihenfolge Maßverkörperung (10; 210; 310; 410; 510; 510'; 610) - zweiter Wellenfrontkorrektor (2200) in der Strahlausbreitungsrichtung angeordnet ist.

2. Optische Positionsmesseinrichtung nach Anspruch 1, wobei der Strahlrichtungsinverter (2300) dergestalt ausgebildet ist, dass eine Strahlrichtungsinversion bezüglich der davon reflektierten Teilstrahlenbündel in zwei orthogonalen Richtungen erfolgt.

3. Optische Positionsmesseinrichtung nach mindestens einem der Ansprüche 1 - 2, wobei der Strahlrichtungsinverter (2300) als Tripelspiegel oder als Tripelprisma ausgebildet ist.

4. Optische Positionsmesseinrichtung nach mindestens einem der Ansprüche 1 - 2, wobei der Strahlrichtungsinverter (2300) als Kombination aus einer Linse und einem Reflektorspiegel ausgebildet ist.

5. Optische Positionsmesseinrichtung nach Anspruch 4, wobei die Wellenfrontkorrektoren (2100; 2200) und/oder die Linse des Strahlrichtungsinverters (2300) als refraktive optische Elemente ausgebildet sind.

6. Optische Positionsmesseinrichtung nach Anspruch 3 oder 4, wobei die Wellenfrontkorrektoren (2100, 2200) als diffraktive optische Elemente ausgebildet sind.

7. Optische Positionsmesseinrichtung nach Anspruch 6, wobei die Wellenfrontkorrektoren (2100, 2200) und die Linse des Strahlrichtungsinverters (2300) als diffraktives optisches Element ausgebildet sind.

8. Optische Positionsmesseinrichtung nach Anspruch 6, wobei die Wellenfrontkorrektoren (2100, 2200) jeweils als diffraktive optische Kombinationselemente in Form von Abtastgittern ausgebildet sind, die ferner mindestens eine der nachfolgenden zusätzlichen optischen Funktionalitäten auf die darauf einfallenden Teilstrahlenbündel aufweisen:

- eine optische Ablenkwirkung,
- eine optische Aufspalt- oder Vereinigungswirkung,
- eine optische Fokussierungswirkung auf den Reflektorspiegel

9. Optische Positionsmesseinrichtung nach mindestens einem der Ansprüche 5 - 8, wobei der Reflektorspiegel und die diffraktiven optischen Elemente auf gegenüberliegenden Seiten einer transparenten Abtastplatte (23; 223; 323; 423; 523; 523'; 623) angeordnet sind.

10. Optische Positionsmesseinrichtung nach mindestens einem der Ansprüche 1 - 9, wobei die Maßverkörperung (10; 210; 310; 410) als Radialteilung auf einer um eine Rotationsachse rotierenden Teilscheibe (11; 211; 311; 411) ausgebildet und konzentrisch um die Rotationsachse angeordnet ist.

11. Optische Positionsmesseinrichtung nach mindestens einem der Ansprüche 1 - 9, wobei die Maßverkörperung (510; 510'; 610) als Trommelteilung auf dem Außenumfang einer rotierenden Teilungstrommel (511; 511'; 611) ausgebildet ist, wobei die Rotationsachse mit der Längsachse der Teilungstrommel zusammenfällt.

12. Optische Positionsmesseinrichtung nach Anspruch 11, wobei die optischen Elemente in der Abtasteinheit (620) derart ausgebildet und angeordnet sind, dass das von der Lichtquelle emittierte Strahlenbündel unter einem Winkel ungleich 90° auf die Trommelteilung einfällt.

## Claims

1. Optical position measuring device for capturing the relative position of a scanning unit (20; 220; 320; 420; 520; 520'; 620; 2000) and a measuring standard (10; 210; 310; 410; 510; 510'; 610; 1000), wherein the scanning unit (20; 220; 320; 420; 520; 520'; 620; 2000) and the measuring standard (10; 210; 310; 410; 510; 510'; 610; 1000) are movable with respect to one another along a curved measurement direction (x), and wherein

- the scanning unit (20; 220; 320; 420; 520; 520'; 620; 2000) has at least one reflector unit (2000) and a detector unit, and the reflector unit (2000) consists of a first wavefront corrector (2100), a beam direction inverter (2300) and a second wavefront corrector (2200), and
- the reflector unit (2000) in the scanning unit (20; 220; 320; 420; 520; 520'; 620; 2000) is arranged and/or embodied such that beams pass first through a first combination of measuring standard (10; 210; 310; 410; 510; 510'; 610; 1000) and first wavefront corrector (2100), then a back reflection of partial beams in the direction of the measuring standard (10; 210; 310; 410; 510; 510'; 610) occurs via the beam direction inverter (2300), and the partial beams then pass through a second combination of measuring standard (10; 210; 310; 410; 510; 510'; 610; 1000) and second wavefront corrector (2200), before the partial beams are subsequently incident on the detector unit, wherein
- what is ensured via the reflector unit (2000) is that the wavefront deformations of the partial beams which result via the first diffraction at the measuring standard (10; 210; 310; 410; 510; 510'; 610; 1000) are converted to wavefront deformations that compensate for the resulting wavefront deformations of the partial beams in the second diffraction at the measuring standard (10; 210; 310; 410; 510; 510'; 610), in that
- via the first wavefront corrector (2100), a conversion of the wavefronts, which exit the first combination of measuring standard (10; 210; 310; 410; 510; 510'; 610) and first wavefront corrector (2100), into collimated partial beams with plane wavefronts takes place, and
- via the second wavefront corrector (2200), a conversion of the wavefronts, which exit the second combination of measuring standard (10; 210; 310; 410; 510; 510'; 610) and second wavefront corrector (2200), into collimated partial beams with plane wavefronts takes place, such that the wavefronts of the partial beams which become superposed are identical at the location of superposition after the second diffraction at the measuring standard (10; 210; 310; 410; 510; 510'; 610), and wherein

either

- the first combination of measuring standard (10; 210; 310; 410; 510; 510'; 610) and first wavefront corrector (2100) is arranged in the order measuring standard (10; 210; 310; 410; 510; 510'; 610) - first wavefront corrector (2100) in the beam propagation direction, and
- the second combination of measuring standard (10; 210; 310; 410; 510; 510'; 610) and second wavefront corrector (2200) is arranged in the order second wavefront corrector (2200) - measuring standard (10; 210; 310; 410; 510; 510'; 610) in the beam propagation direction,
or
- the first combination of measuring standard (10; 210; 310; 410; 510; 510'; 610) and first wavefront corrector (2100) is arranged in the order first wavefront corrector (2100) - measuring standard (10; 210; 310; 410; 510; 510'; 610) in the beam propagation direction and
- the second combination of measuring standard (10; 210; 310; 410; 510; 510'; 610) and second wavefront corrector (2200) is arranged in the order measuring standard (10; 210; 310; 410; 510; 510'; 610) - second wavefront corrector (2200) in the beam propagation direction.

2. Optical position measuring device according to Claim 1, wherein the beam direction inverter (2300) is embodied such that a beam direction inversion with respect to the partial beams reflected thereby in two orthogonal directions is effected.

3. Optical position measuring device according to at least one of Claims 1-2, wherein the beam direction inverter (2300) is embodied as a triple mirror or as a triple prism.

4. Optical position measuring device according to at least one of Claims 1-2, wherein the beam direction inverter (2300) is embodied as a combination of a lens and a reflector mirror.

5. Optical position measuring device according to Claim 4, wherein the wavefront correctors (2100; 2200) and/or the lens of the beam direction inverter (2300) are embodied as refractive optical elements.

6. Optical position measuring device according to Claim 3 or 4, wherein the wavefront correctors (2100, 2200) are embodied as diffractive optical elements.

7. Optical position measuring device according to Claim 6, wherein the wavefront correctors (2100, 2200) and the lens of the beam direction inverter (2300) are embodied as diffractive optical element.

8. Optical position measuring device according to Claim 6, wherein the wavefront correctors (2100, 2200) are embodied in each case as diffractive optical combination elements in the form of scanning gratings, which furthermore have at least one of the following additional optical functionalities for the partial beams which are incident thereon:

   - an optical deflection effect,
   - an optical splitting or recombining effect,
   - an optical focusing effect on the reflector mirror.

9. Optical position measuring device according to at least one of Claims 5-8, wherein the reflector mirror and the diffractive optical elements are arranged on opposite sides of a transparent scanning plate (23; 223; 323; 423; 523; 523'; 623).

10. Optical position measuring device according to at least one of Claims 1-9, wherein the measuring standard (10; 210; 310; 410) is configured as a radial scale on a scale disc (11; 211; 311; 411) which rotates about an axis of rotation and is arranged concentrically around the axis of rotation.

11. Optical position measuring device according to at least one of Claims 1-9, wherein the measuring standard (510; 510'; 610) is embodied as a drum scale on the outer periphery of a rotating scale drum (511; 511'; 611), wherein the axis of rotation coincides with the longitudinal axis of the scale drum.

12. Optical position measuring device according to Claim 11, wherein the optical elements in the scanning unit (620) are embodied and arranged such that the beam emitted by the light source is incident on the drum scale at an angle other than 90°.

**Revendications**

1. Dispositif de mesure de position optique destiné à détecter la position relative d'une unité de balayage (20 ; 220 ; 320 ; 420 ; 520 ; 520' ; 620 ; 2000) et d'un étalon (10 ; 210 ; 310 ; 410 ; 510 ; 510' ; 610 ; 1000), l'unité de balayage (20 ; 220 ; 320 ; 420 ; 520 ; 520' ; 620 ; 2000) et l'étalon (10 ; 210 ; 310 ; 410 ; 510 ; 510' ; 610 ; 1000) pouvant se déplacer l'un par rapport à l'autre le long d'une direction de mesure (x) curviligne et

   - l'unité de balayage (20 ; 220 ; 320 ; 420 ; 520 ; 520' ; 620 ; 2000) possédant au moins une unité de réflexion (2000) et une unité de détection et l'unité de réflexion (2000) se composant d'un premier correcteur de front d'onde (2100), d'un inverseur de sens de rayonnement (2300) et d'un deuxième correcteur de front d'onde (2200) et
   - l'unité de réflexion (2000) étant disposée et/ou configurée dans l'unité de balayage (20 ; 220 ; 320 ; 420 ; 520 ; 520' ; 620 ; 2000) de telle sorte que les faisceaux de rayons traversent tout d'abord une première combinaison de l'étalon (10 ; 210 ; 310 ; 410 ; 510 ; 510' ; 610 ; 1000) et du premier correcteur de front d'onde (2100), après quoi une rétroreflexion de faisceaux de rayons partiels est effectuée par l'inverseur de sens de rayonnement (2300) en direction de l'étalon (10 ; 210 ; 310 ; 410 ; 510 ; 510' ; 610) et les faisceaux de rayons partiels traversent ensuite une deuxième combinaison de l'étalon (10 ; 210 ; 310 ; 410 ; 510 ; 510' ; 610 ; 1000) et du deuxième correcteur de front d'onde (2200) avant que les faisceaux de rayons partiels viennent ensuite frapper l'unité de détection,
   - l'unité de réflexion (2000) permettant de garantir que les déformations de front d'onde des faisceaux de rayons partiels qui résultent par le biais de la première diffraction au niveau de l'étalon (10 ; 210 ; 310 ; 410 ; 510 ; 510' ; 610 ; 1000) sont converties en des déformations de front d'onde qui compensent les déformations de front d'onde résultantes des faisceaux de rayons partiels lors de la deuxième diffraction au niveau de l'étalon (10 ; 210 ; 310 ; 410 ; 510 ; 510' ; 610) en ce que
   - une conversion des fronts d'onde sortant de la première combinaison de l'étalon (10 ; 210 ; 310 ; 410 ; 510 ; 510' ; 610) et du premier correcteur de front d'onde (2100) en faisceaux de rayons partiels collimatés ayant des fronts d'onde plans est effectuée par le biais du premier correcteur de front d'onde (2100) et
   - une conversion des fronts d'onde sortant de la deuxième combinaison de l'étalon (10 ; 210 ; 310 ; 410 ; 510 ; 510' ; 610) et du deuxième correcteur de front d'onde (2200) en faisceaux de rayons partiels collimatés ayant des fronts d'onde plans est effectuée par le biais du deuxième correcteur de front d'onde (2200), de telle sorte que les fronts d'onde des faisceaux de rayons partiels qui viennent en superposition au niveau de l'étalon (10 ; 210 ; 310 ; 410 ; 510 ; 510' ; 610) sont identiques à l'endroit de la superposition et

soit

- la première combinaison de l'étalon (10 ; 210 ; 310 ; 410 ; 510 ; 510' ; 610) et du premier correcteur de front d'onde (2100) étant disposée dans le sens de propagation du rayonnement dans l'ordre étalon (10 ; 210 ; 310 ; 410 ; 510 ; 510' ; 610) - premier correcteur de front d'onde (2100) et
- la deuxième combinaison de l'étalon (10 ; 210 ; 310 ; 410 ; 510 ; 510' ; 610) et du deuxième correcteur de front d'onde (2200) étant disposée dans le sens de propagation du rayonnement dans l'ordre deuxième correcteur de front d'onde (2200) - étalon (10 ; 210 ; 310 ; 410 ; 510 ; 510' ; 610)

soit

- la première combinaison de l'étalon (10 ; 210 ; 310 ; 410 ; 510 ; 510' ; 610) et du premier correcteur de front d'onde (2100) étant disposée dans le sens de propagation du rayonnement dans l'ordre premier correcteur de front d'onde (2100) - étalon (10 ; 210 ; 310 ; 410 ; 510 ; 510' ; 610) et
- la deuxième combinaison de l'étalon (10 ; 210 ; 310 ; 410 ; 510 ; 510' ; 610) et du deuxième correcteur de front d'onde (2200) étant disposée dans le sens de propagation du rayonnement dans l'ordre étalon (10 ; 210 ; 310 ; 410 ; 510 ; 510' ; 610) - deuxième correcteur de front d'onde (2200).

2. Dispositif de mesure de position optique selon la revendication 1, l'inverseur de sens de rayonnement (2300) étant configuré de telle sorte qu'une inversion du sens du rayonnement par rapport aux faisceaux de rayons partiels réfléchis par celui-ci est effectuée dans deux directions orthogonales.

3. Dispositif de mesure de position optique selon une ou plusieurs des revendications 1 à 2, l'inverseur de sens de rayonnement (2300) étant réalisé sous la forme d'un réflecteur en trièdre ou d'un prisme triple.

4. Dispositif de mesure de position optique selon une ou plusieurs des revendications 1 à 2, l'inverseur de sens de rayonnement (2300) étant réalisé sous la forme d'une combinaison d'une lentille et d'un miroir réflecteur.

5. Dispositif de mesure de position optique selon la revendication 4, les correcteurs de front d'onde (2100 ; 2200) et/ou la lentille de l'inverseur de sens de rayonnement (2300) étant réalisés sous la forme d'éléments optiques réfractifs.

6. Dispositif de mesure de position optique selon la revendication 3 ou 4, les correcteurs de front d'onde (2100, 2200) étant réalisés sous la forme d'éléments optiques diffractifs.

7. Dispositif de mesure de position optique selon la revendication 6, les correcteurs de front d'onde (2100, 2200) et la lentille de l'inverseur de sens de rayonnement (2300) étant réalisés sous la forme d'un élément optique diffractif.

8. Dispositif de mesure de position optique selon la revendication 6, les correcteurs de front d'onde (2100, 2200) étant respectivement réalisés en tant qu'éléments combinés optiques diffractifs sous la forme de réseaux de balayage qui possèdent en outre au moins l'une des fonctionnalités optiques suivantes sur les faisceaux de rayons partiels qui y sont incidents :

- un effet de déviation optique,
- un effet de dédoublement ou d'unification optique,
- un effet de concentration optique sur le miroir réflecteur.

9. Dispositif de mesure de position optique selon au moins l'une des revendications 5 à 8, le miroir réflecteur et les éléments optiques diffractifs étant disposés sur les côtés opposés d'une plaque de balayage (23 ; 223 ; 323 ; 423 ; 523 ; 523' ; 623) transparente.

10. Dispositif de mesure de position optique selon au moins l'une des revendications 1 à 9, l'étalon (10 ; 210 ; 310 ; 410) étant réalisé sous la forme d'une graduation radiale sur un disque d'indexage (11 ; 211 ; 311 ; 411) en rotation autour d'un axe de rotation et disposé de manière concentrique autour de l'axe de rotation.

11. Dispositif de mesure de position optique selon au moins l'une des revendications 1 à 9, l'étalon (510 ; 510' ; 610) étant réalisé sous la forme d'une graduation de tambour sur le pourtour extérieur d'un tambour diviseur (511 ; 511' ; 611) en rotation, l'axe de rotation coïncidant avec l'axe longitudinal du tambour diviseur.

12. Dispositif de mesure de position optique selon la revendication 11, les éléments optiques dans l'unité de balayage (620) étant configurés et disposés de telle sorte que le faisceau de rayons émis par la source de lumière est incident sur la graduation de tambour selon un angle différent de 90°.

## FIG. 1a

## FIG. 1b

## FIG. 1c

FIG. 1d

$S_{in"}$

$S_{out}$

$S_{in'}$

$S_{out'}$

$S_{in}$

$S_{out"}$

2000

2300

$W_{in"}$

$W_{out}$

2100, 2200

$W_{in'}$

$W_{out'}$

1000

$W_{in}$

$W_{out"}$

FIG. 1e

$S_{in"}$

$S_{out}$

$S_{in'}$

$S_{out'}$

$S_{in}$

$S_{out"}$

2000

2300

$W_{in"}$

$W_{out}$

2100, 2200

$W_{in'}$

$W_{out'}$

1000

$W_{in}$

$W_{out"}$

FIG. 2

FIG. 3a

FIG. 3b

FIG. 4

FIG. 5

FIG. 6

FIG. 7a

FIG. 7b

FIG. 8

FIG. 9

FIG. 10a

FIG. 10b

FIG. 11a

FIG. 11b

FIG. 12

323'

324.2b'

Y=R$_A$

324.2a'

TS2b'

TS2a'

TS1b'

TS1a'

324.1b'

324.1a'

Y
Z
X

FIG. 13

FIG. 14a

FIG. 14b

FIG. 15

FIG. 16

FIG. 17

624.2b

623

626.1

620

626.2

624.1b

TS

624.2a

624.1a

S

610

611

Z

Y

X

# FIG. 18

FIG. 19

FIG. 20a

FIG. 20b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 387520 A2
- US 5442172 A
- EP 1901041 A2
- EP 0163362 B1
- EP 1923673 A2
- DE 102005029917 A1